# EUROPÄISCHE PATENTSCHRIFT

(11) **EP 2 361 690 B1**
(45) Veröffentlichungstag und Bekanntmachung des Hinweises auf die Patenterteilung: **16.10.2013**
(21) Anmeldenummer: 10015549.8
(22) Anmeldetag: 11.12.2010
(51) Int. Cl.: B05B 5/04, G01M 99/00

(54) **Prüfvorrichtung und Prüfverfahren zum Prüfen der Funktionsfähigkeit einer Zerstäubereinrichtung zum Aufbringen eines Beschichtungsmittels**
Test device and test method for testing the functionality of an atomiser used to apply a coating agent
Dispositif de contrôle et procédé de contrôle pour contrôler la capacité de fonctionnement d'un dispositif de gicleur destiné à appliquer un moyen de revêtement

(30) Priorität: 19.02.2010 DE 102010000470
(43) Veröffentlichungstag der Anmeldung: 31.08.2011
(73) Patentinhaber: Dr. Ing. h.c. F. Porsche AG, 70435 Stuttgart (DE)
(72) Erfinder: Zietemann, Joerg, 71334 Waiblingen (DE); Gerstung, Roland, 71691 Freiberg (DE); Hess, Axel, 74172 Neckarsulm (DE)

(56) Entgegenhaltungen:
- DE-A1-102005 044 154
- DE-A1-102007 062 132

## Beschreibung

### STAND DER TECHNIK

Die vorliegende Erfindung bezieht sich auf eine Prüfvorrichtung und auf ein Prüfverfahren zum Prüfen der Funktionsfähigkeit einer Zerstäubereinrichtung zum Aufbringen eines Beschichtungsmittels.

Aus der DE 102007062132 A1 ist ein Testverfahren zur Funktionsprüfung einer Lackiereinrichtung mit den folgenden Schritten bekannt: Anschließen eines Testgeräts an die Lackiereinrichtung, Erfassen von Prozessgrößen der Lackiereinrichtung über einen Anschluss durch das Testgerät und Überprüfen der Funktionsfähigkeit der Lackiereinrichtung durch das testgerät anhand der erfassten Prozessgrößen der Lackiereinrichtung.

Obwohl die vorliegende Erfindung im Zusammenhang mit dem Aufbringen oder Auftragen verschiedenster Beschichtungsmittel auf Oberflächen unterschiedlichster Gegenstände oder Produkte und mit den im Zusammenhang mit diesem Auftragen verwendeten Zerstäubereinrichtungen anwendbar ist, werden die vorliegende Erfindung und die ihr zu Grunde liegende Problematik nachfolgend am Beispiel des Lackierens einer Kraftfahrzeugkarosse näher erläutert.

Die Oberflächen von Karossen für Fahrzeuge, insbesondere für Automobile, werden bereits seit geraumer Zeit mit Beschichtungsmitteln, meist in Form von Lacken, behandelt, um das Material, aus dem die Karossen bestehen, zum einen vor Korrosion zu schützen, und um zum anderen die ästhetischen Ansprüche der Kunden an das optische Erscheinungsbild dieser Fahrzeuge zufrieden zu stellen.

Als Beschichtungsmittel kommen hierbei insbesondere Nasslacke, im einzelnen Wasser- und Lösemittellacke, als Grund-, Basis-, Deck- und Klarlacke sowie Füller zum Ausgleichen von Unebenheiten als Steinschlagschutz und zur Sicherstellung der Farbtongenauigkeit zum Einsatz.

Der Lack und/oder der Füller kann hierbei zumeist in mehreren Schichten zumindest auf Teile der inneren und äußeren Oberflächen einer Karosse oder zu lackierenden Teilen mittels einer Zerstäubereinrichtung in einer automatischen Lackieranlage oder eines Lackierroboters aufgetragen werden. Als Ergebnis der Lackiervorgangs erwartet der Käufer des Kraftfahrzeugs eine gleichmäßig lackierte, ebenmäßige und ansprechende Oberfläche. Bei den Fahrzeugherstellern besteht wiederum der Wunsch, eine hohe Qualität der lackierten Oberfläche effizient und mit geringem Zeitaufwand zu erreichen. Daher sind zusätzlich meist geringe Lackiergeschwindigkeiten aber hohe Verfügbarkeiten der Anlage erwünscht.

Im Automobilbereich werden zum Aufbringen des Beschichtungsmittels auf die Karosse daher insbesondere Rotationszerstäuber mit einem schnell rotierenden Glockenteller verwendet. Durch die Wirkung der Zentrifugalkraft auf das Beschichtungsmittel, welches hier beispielsweise in Gestalt von flüssigem Lack vorliegt, wird dieses zerstäubt, also in feinste Tropfen zerteilt, und kann sich als Sprühnebel gleichmäßig an die zu beschichtende Oberfläche anlegen.

Um einen möglichst großen Teil des verbrauchten Lacks auf die zu behandelnde Oberfläche aufzubringen und den so genannten "Overspray", also den Verlust, der durch das Niederschlagen von Lacknebel an unerwünschten Stellen, namentlich an der Wand einer Lackierkabine, entsteht, zu begrenzen, die Umweltbelastung und den Reinigungsaufwand für die Kabine zu minimieren und zugleich eine optimale Oberflächenqualität des beschichteten Produkts zu erzielen, kann bei modernen Rotationszerstäubern das Beschichtungsmittel elektrostatisch aufgeladen werden. Diese Vorgehensweise wird auch als ESTA-Verfahren bezeichnet. Die zu beschichtende Karosse ist hierbei geerdet, so dass die Tröpfchen des Beschichtungsmittels den elektrischen Feldlinien bis zur Karosse folgen können. Damit kann insbesondere eine besonders gleichmäßige Oberflächenqualität erreicht und schlecht zugängliche Stellen können besser beschichtet werden.

Derartige Hochgeschwindigkeits-Rotationszerstäuber mit der Möglichkeit einer gezielten elektrostatischen Aufladung des Beschichtungsmittels zur Verbesserung des Auftragswirkungsgrades sind der Anmelderin als interner Stand der Technik bekannt. Die Glockenteller dieser Rotationszerstäuber können Drehzahlen bis zu 70000 Umdrehungen pro Minute erreichen.

Um eine gleichbleibende Qualität der lackierten Oberflächen sicherzustellen und einen kontinuierlichen ausfallfreien Betrieb der zumeist stark ausgelasteten Lackierstraßen für Fahrzeugkarossen zu gewährleisten, ist es vorteilhaft, in regelmäßigen zeitlichen Abständen eine Wartung der Rotationszerstäuber durchzuführen. Zu diesem Zweck werden bei einer herkömmlichen Vorgehensweise die Zerstäuber zunächst von dem Lackierroboter oder der Lackieranlage demontiert. Die sich anschließende Wartung umfasst ein weitgehendes Zerlegen des Rotationszerstäubers und das Überprüfen sämtlicher Bauteile auf Verschleiß sowie Reinigungs- und Erneuerungsbedarf. Nach Notwendigkeit können Bauelemente ausgetauscht, repariert oder gereinigt werden.

Wegen der geforderten hohen Qualität und Gleichmäßigkeit der zu lackierenden Oberflächen kann ein fehlerhaft funktionierender Rotationszerstäuber im Produktionsbetrieb nicht toleriert werden. Daher ist im Anschluss an die genannten Wartungsarbeiten vor einem erneuten Einsatz des Zerstäubers in der Produktion eine Überprüfung desselben auf seine volle Funktionstüchtigkeit hin unabdingbar.

Die bisher zum Einsatz kommende Vorgehensweise sieht vor, dass ein Rotationszerstäuber nach Abschluss der Wartungsarbeiten an einem zugeordneten Lackierroboter montiert oder in eine Lackieranlage wieder eingebaut und dort nachfolgend getestet wird. Dieses Vorgehen hat sich jedoch als unbefriedigend erwiesen, da wegen der starken Auslastung der Lackierstraßen nur kurze Zeitfenster für derartige Montagearbeiten und Zerstäubertests zur Verfügung stehen. Die Montage des Zerstäuber ist jedoch arbeits- und damit zeitaufwändig, und falls der Zerstäuber nach Wartung und erfolgtem Wiedereinbau nicht wie gewünscht funktioniert und daher erneut demontiert und vollständig gereinigt werden muss, kann sich die Ausfallzeit der betroffenen Lackieranlage oder des Lackierroboters erheblich verlängern. Ungünstige Auswirkungen auf den Ablauf von der Karossenlackierung vor- und nachgeschalteten Produktionsschritten können die Folge sein. Auch die Ausfalldauer des betroffenen Zerstäubers kann sich auf diese Weise erheblich verlängern.

Der vorliegenden Erfindung liegt daher die Aufgabe zugrunde, eine Prüfvorrichtung und ein Prüfverfahren bereitzustellen, welche es ermöglichen, auf zuverlässige Weise und mit geringem Aufwand die Funktionsfähigkeit einer Zerstäubereinrichtung zum Aufbringen eines Beschichtungsmittels zu überprüfen.

### VORTEILE DER ERFINDUNG

Diese Aufgabe wird durch eine Prüfvorrichtung mit den Merkmalen des Patentanspruchs 1 und durch ein Prüfverfahren mit den Merkmalen des Patentanspruchs 13 gelöst.

Demgemäß ist eine Prüfvorrichtung zum Prüfen der Funktionsfähigkeit einer Zerstäubereinrichtung zum Aufbringen eines Beschichtungsmittels, insbesondere eines Lackes im Kraftfahrzeugbereich, vorgesehen. Die Prüfvorrichtung weist eine Aufnahmeeinrichtung zum Aufnehmen der zu prüfenden Zerstäubereinrichtung in einem vorbestimmten Betriebszustand auf. Weiterhin weist die Prüfvorrichtung eine Prüfmittel-Zuführ-Einrichtung auf, welche zum Zuführen eines vorbestimmten, zu zerstäubenden Prüfmittels zu der aufgenommenen Zerstäubereinrichtung mit der Aufnahmeeinrichtung gekoppelt ist. Ferner ist eine Steuereinrichtung zum Durchführen eines Prüfbetriebes der aufgenommenen Zerstäubereinrichtung vorgesehen. Der Prüfbetrieb erfolgt nach einem vorbestimmten Prüfprogramm und dient dem Prüfen einer vorbestimmten Funktion der aufgenommenen Zerstäubereinrichtung.

Weiterhin ist erfindungsgemäß ein Prüfverfahren zum Prüfen der Funktionsfähigkeit einer Zerstäubereinrichtung zum Aufbringen eines Beschichtungsmittels, insbesondere eines Lackes im Kraftfahrzeugbereich, mittels einer Prüfvorrichtung vorgesehen. In einem Verfahrensschritt erfolgt ein Aufnehmen der zu prüfenden Zerstäubereinrichtung in einem vorbestimmten Betriebszustand mittels einer Aufnahmeeinrichtung. In einem weiteren Verfahrensschritt wird ein vorbestimmtes, zu zerstäubendes Prüfmittel zu der aufgenommenen Zerstäubereinrichtung mittels einer mit der Aufnahmeeinrichtung gekoppelten Prüfmittel-Zuführeinrichtung zugeführt. In einem weiteren Verfahrensschritt wird ein Prüfbetrieb der aufgenommenen Zerstäubereinrichtung nach einem vorbestimmten Prüfprogramm mittels einer Steuereinrichtung durchgeführt, um eine vorbestimmte Funktion der aufgenommenen Zerstäubereinrichtung zu prüfen.

Die Idee der vorliegenden Erfindung besteht darin, eine Zerstäubereinrichtung, wie sie beispielsweise zum Aufbringen eines Lackes auf eine Fahrzeugkarosse verwendet werden kann, mittels einer hierfür bestimmten Prüfvorrichtung auf ihre Funktionsfähigkeit hin zu überprüfen. Die Zerstäubereinrichtung muss daher zur Durchführung einer derartigen Prüfung nicht mehr an oder in einer Beschichtungsvorrichtung, wie beispielsweise einem Lackierroboter oder einer Lackieranlage, montiert werden. Vielmehr erlauben die Prüfvorrichtung und das Prüfverfahren einen Prüf- oder Testbetrieb der Zerstäubereinrichtung unabhängig von der Verfügbarkeit oder dem Auslastungsgrad der eigentlichen Beschichtungsvorrichtung. Der Prüfbetrieb kann an einem nahezu frei wählbaren Ort beispielsweise innerhalb einer Werkshalle durchgeführt werden. Auch wird der reguläre Betrieb der Beschichtungsvorrichtung nicht behindert. Lackierstraßen für Fahrzeugkarossen zum Beispiel sind oftmals fast 24 Stunden täglich ausgelastet, so dass sich die Erfindung insbesondere im Automobilbereich als vorteilhaft erweist. Die mit der Aufnahmeeinrichtung gekoppelte Prüfmittel-Zuführeinrichtung ermöglicht es, der aufgenommenen Zerstäubereinrichtung ein vorbestimmtes Prüfmittel zuzuführen. Dieses Prüfmittel kann von der Zerstäubereinrichtung anstelle des eigentlichen Beschichtungsmittels zerstäubt werden, um auf diese Weise die Funktionsfähigkeit der Zerstäubereinrichtung zu überprüfen. Sollte sich eine erneute Wartung der Zerstäubereinrichtung als notwendig erweisen, weil festgestellt wird, dass sie nicht zufriedenstellend funktioniert, so kann durch die Verwendung eines Prüfmittels vermieden werden, die Zerstäubereinrichtung nach dem Prüfbetrieb wiederum einer zeitraubenden Reinigung unterziehen zu müssen, um sie von Beschichtungsmittel zu befreien. Darüber hinaus kann der Einsatz eines Prüfmittels auch die Notwendigkeit, die Zerstäubereinrichtung für den Testbetrieb in eine Beschichtungskabine oder ähnliches zu verbringen, vermeiden. Die Durchführung des Prüfbetriebs mittels einer Steuereinrichtung und nach einem vorbestimmten Prüfprogramm ermöglicht ein zuverlässiges, reproduzierbares Prüfen insbesondere einer oder mehrerer als wesentlich erkannter Funktionen der Zerstäubereinrichtung.

Vorteilhafte Ausgestaltungen und Weiterbildungen der Erfindung ergeben sich aus den weiteren Unteransprüchen in Zusammenschau mit den Figuren der Zeichnung.

Bei einer Weiterbildung ist ein mit der Prüfmittel-Zuführ-Einrichtung in Fluidverbindung stehendes Prüfmittelbehältnis zum Vorhalten einer vorbestimmten Menge an Prüfmittel vorgesehen. Die Prüfvorrichtung ist damit nicht von einer externen Versorgung mit dem Prüfmittel abhängig und ihr Aufstellort kann somit flexibler ausgewählt werden.

In einer vorteilhaften Ausgestaltung der erfindungsgemäßen Prüfvorrichtung weist die Prüfmittel-Zuführeinrichtung eine Pumpeinrichtung, insbesondere eine Druckluftmembranpumpe, zum Fördern des Prüfmittels zu der aufgenommenen Zerstäubereinrichtung auf. Dies ermöglicht es, Zerstäubereinrichtungen zu prüfen, welche das Beschichtungs- und damit auch das Prüfmittel nicht selbsttätig ansaugen können und/oder deren Betrieb das Vorliegen eines bestimmten Prüfmitteldrucks verlangt.

In einer weiteren vorteilhaften Ausgestaltung ist eine mit der Aufnahmeeinrichtung gekoppelte Druckluft-Zuführeinrichtung zum Zuführen von Druckluft zu der aufgenommenen Zerstäubereinrichtung vorgesehen. Dies ermöglicht einen Prüfbetrieb von pneumatisch angetriebenen Zerstäubereinrichtungen.

In einer typischen Ausgestaltung weist die Druckluft-Zuführeinrichtung mehrere Druckluftleitungen zum Zuführen von Druckluft zu der aufgenommenen Zerstäubereinrichtung auf. Weiterhin sind bei dieser Ausgestaltung zur Regulierung eines Druckluftstroms in zumindest einer der Druckluftleitungen ein oder mehrere mittels der Steuereinrichtung betätigbare Ventile vorgesehen. Dies ist besonders vorteilhaft, wenn einzelne Funktionen der Zerstäubereinrichtung jeweils eine getrennte und insbesondere auch schalt- oder regulierbare Druckluftzufuhr über die mit der Aufnahmeeinrichtung gekoppelte Druckluft-Zuführeinrichtung erfordern.

Gemäß einer Weiterbildung weist die Druckluft-Zuführeinrichtung eine mit der Steuereinrichtung gekoppelte Luftmengenregeleinrichtung, insbesondere ein Proportionalregelventil, zur Regelung einer eine der Druckluftleitungen durchströmenden Luftmenge in Abhängigkeit von einer durch die Steuereinrichtung bereitgestellten Ist-Größe und einer durch die Steuereinrichtung bereitgestellten zugehörigen Soll-Größe auf. Dies ist vorteilhaft, um beispielsweise die Drehzahl eines Applikationskörpers eines pneumatisch angetriebenen Rotationszerstäubers mittels der Steuereinrichtung regulieren zu können.

In einer vorteilhaften Ausgestaltung der erfindungsgemäßen Prüfvorrichtung ist ein Prüfbehältnis zum Auffangen des während des Prüfbetriebes zerstäubten Prüfmittels, insbesondere für eine erneute Verwendung desselben zur fortgesetzten Prüfung der Funktionsfähigkeit der aufgenommenen Zerstäubereinrichtung, vorgesehen. Diese Ausgestaltung erlaubt es, das zerstäubte Prüfmittel wieder zu sammeln, um es mittels einer Zerstäubereinrichtung erneut zu zerstäuben. Dadurch ist auch ein länger andauernder Prüfbetrieb der Zerstäubereinrichtung und somit eine zuverlässige Prüfung bei gleichzeitig sparsamem und umweltschonendem Gebrauch des Prüfmittels möglich.

Gemäß einer Ausgestaltung der erfindungsgemäßen Prüfvorrichtung begrenzen die Wände des Prüfbehältnisses einen Innenraum, wobei eine der Wände als eine öffenbare und schließbare Abdeckung ausgebildet ist, welche in geöffnetem Zustand einen Zugang zu dem Innenraum erlaubt. Das Bedienpersonal der Prüfvorrichtung kann somit vorteilhaft vor dem Prüfmittel, welches bei dem Prüfbetrieb anstelle des Beschichtungsmittels aus der Zerstäubereinrichtung austreten kann, geschützt werden und ein unkontrolliertes Herausspritzen des Prüfmittels aus dem Prüfbehältnis kann verhindert werden, was im Sinne der Arbeitssicherheit vermieden werden sollte. Sollte es trotz aller Sorgfalt bei Zusammenbau und Montage der Zerstäubereinrichtung zu einer Funktionsstörung der Zerstäubereinrichtung kommen, bei welcher sich Bauteile von dieser lösen können, so kann die Abdeckung das Bedienpersonal vor umherfliegenden Bauteilen schützen und eine Gefährdung vermeiden.

Gemäß einer typischen Weiterbildung ist die Abdeckung des Prüfbehältnisses transparent ausgebildet. Damit ist es möglich, die aufgenommene Zerstäubereinrichtung während des Prüfbetriebs zu beobachten und mögliche Betriebsstörungen oder mangelhaftes Funktionieren der Zerstäubereinrichtung schnell zu erkennen und die notwendigen Maßnahmen zu ergreifen.

Gemäß einer vorteilhaften Ausgestaltung ist die Abdeckung für das Prüfbehältnis als eine Platte aus Polycarbonat, mit einer Stärke von beispielsweise 8 mm, ausgebildet. Polycarbonat kann als ein transparentes Material mit günstigen mechanischen Eigenschaften hergestellt werden. Dies ist vorteilhaft, wenn die Abdeckung als Sicherheitsabdeckung zum Schutz des Bedieners vor umherfliegenden Bauteilen vorgesehen ist. Darüber hinaus ist Polycarbonat gegen Wasser beständig, was von Vorteil ist, falls Wasser als Prüfmittel gewählt wird.

Gemäß einer vorteilhaften Weiterbildung der Erfindung ist die Vorrichtung mit Aluminiumprofilen gebildet und weist insbesondere einen aus Aluminium-Strangpressprofilen aufgebauten Rahmen auf, an dem Platten aus Aluminium und/oder Bleche aus einem vorzugsweise hochlegierten korrosionsbeständigen austenitischen Stahl, beispielsweise einem Stahl der Sorten V2A (X 5 CrNi 18 10) oder V4A (X 5 CrNiMo 17 12 2), befestigt sind. Die Verwendung von Aluminiumprofilen erlaubt es, ein relativ geringes Gewicht der Vorrichtung zu erzielen. Weil es beim Betrieb der Vorrichtung zu einem Kontakt mit dem Prüfmittel kommen kann, ist eine gute Korrosionsbeständigkeit der Materialien von Vorteil.

Gemäß einer weiteren vorteilhaften Weiterbildung ist das Prüfbehältnis aus einem korrosionsbeständigen Stahl, insbesondere aus einem Stahl der Sorten V2A (X 5 CrNi 18 10) oder V4A (X 5 CrNiMo 17 12 2), gefertigt. Hierdurch wird eine lange Lebensdauer des ständig mit dem Prüfmittel in Kontakt kommenden Prüfbehältnisses sichergestellt.

Gemäß einer bevorzugten Weiterbildung ist die Aufnahmeeinrichtung derart angeordnet und ausgebildet, dass sich die aufgenommene Zerstäubereinrichtung mit einem Abschnitt, aus dem während des Prüfbetriebes zerstäubtes Prüfmittel austreten kann, innerhalb des Prüfbehältnisses befindet. Durch diese Maßnahme wird das austretende zerstäubte Prüfmittel möglichst vollständig aufgefangen und gelangt nicht in die Umgebung. Ein Verschmutzen der Umgebung und eine eventuelle Gefährdung des Bedienpersonals durch das Prüfmittel kann auf diese Weise vermieden werden.

Bei einer ebenfalls bevorzugten Weiterbildung ist die Aufnahmeeinrichtung derart innerhalb des Prüfbehältnisses angeordnet, dass sich die aufgenommene Zerstäubereinrichtung vollständig innerhalb des Prüfbehältnisses befindet. Ein noch weiter verbesserter Schutz vor umherspritzendem Prüfmittel und ein verbesserter Schutz im Falle einer Funktionsstörung der Auftrageinrichtung kann auf diese Weise erzielt werden.

In einer Ausgestaltung der erfindungsgemäßen Prüfvorrichtung ist die Aufnahmeeinrichtung derart ausgebildet, dass die Zerstäubereinrichtung zur Aufnahme mittels der Aufnahmeeinrichtung mit der Aufnahmeeinrichtung lösbar mechanisch verbindbar ist. Eine lösbare mechanische Verbindung ermöglicht ein sicheres Halten der Zerstäubereinrichtung während des Prüfbetriebs.

In einer vorteilhaften Ausgestaltung ist die Aufnahmeeinrichtung für eine Aufnahme von ein, zwei oder mehr Zerstäubereinrichtungen gleicher oder unterschiedlicher Bauart ausgebildet. Hierbei ist insbesondere zu einem vorbestimmten Zeitpunkt eine vorbestimmte Anzahl an Zerstäubereinrichtungen, beispielsweise genau eine Zerstäubereinrichtung, in der Aufnahmeeinrichtung aufnehmbar. Dadurch wird der Einsatzbereich der Prüfvorrichtung deutlich erweitert. Bei unterschiedlichen Beschichtungsvorrichtungen wie etwa in Lackieranlagen und auf Lackierrobotern kommen Zerstäubereinrichtungen unterschiedlicher Bauart zum Einsatz, welche auch unterschiedliche mechanische Schnittstellen und verschiedene Befestigungseinrichtungen aufweisen können. Es ist somit also beispielsweise von Vorteil, wenn die Prüfvorrichtung eine Aufnahmeeinrichtung aufweist, welche das Aufnehmen von mehreren Zerstäubereinrichtungen unterschiedlichen Typs erlaubt.

In einer typischen Ausgestaltung weist die Aufnahmeeinrichtung mindestens eine mit der Steuereinrichtung gekoppelte Detektionseinrichtung, insbesondere einen Näherungsschalter, zur Erfassung der Position der zu prüfenden Zerstäubereinrichtung auf, welche ein Signal an die Steuereinrichtung übermittelt, wenn die Zerstäubereinrichtung eine vorbestimmte Position in Bezug auf die Aufnahmeeinrichtung erreicht hat. Bei dieser Ausgestaltung ermöglicht die Steuereinrichtung das Prüfen einer vorbestimmten Funktion der aufgenommenen Zerstäubereinrichtung nach dem Erhalt dieses Signals. Durch diese Maßnahme kann vorteilhaft gewährleistet werden, dass Prüfmittel und/oder Druckluft durch die Prüfmittel-Zuführeinrichtung und/oder die Druckluft-Zuführeinrichtung nicht zugeführt werden, solange die Zerstäubereinrichtung nicht in einer für einen Prüfbetrieb geeigneten Position aufgenommen ist. Dies kann die Sicherheit beim Arbeiten mit der Prüfvorrichtung erhöhen.

Gemäß einer Weiterbildung ist die Detektionseinrichtung als ein induktiver, ein kapazitiver, ein magnetischer, ein elektromagnetischer oder ein optischer Näherungsschalter ausgebildet. Die korrekte Position der Zerstäubereinrichtung an oder in der Aufnahmeeinrichtung kann damit berührungsfrei und zuverlässig erkannt werden.

In einer Ausgestaltung der erfindungsgemäßen Prüfvorrichtung weist die Steuereinrichtung eine speicherprogrammierbare Steuerung (SPS) auf. Dies ist vorteilhaft für einen flexiblen, komfortablen und sicheren Betrieb der Prüfvorrichtung einschließlich des Ansteuerns der Zerstäubereinrichtung.

Gemäß einer Weiterbildung umfasst die aufgenommene Zerstäubereinrichtung einen Rotationszerstäuber, insbesondere einen pneumatisch angetriebenen Hochgeschwindigkeits-Rotationszerstäuber, mit einem drehbaren Applikationskörper, insbesondere einem Glockenteller. Der Applikationskörper ist beispielsweise zur Erzeugung eines gleichmäßigen Sprühnebels und für einen hohen Durchsatz an Beschichtungsmittel mit hoher Drehzahl drehbar. Derartige Zerstäubereinrichtungen kommen insbesondere bei der Fertigung von Kraftfahrzeugkarossen zum Auftragen von Grund-, Basis-, Deck- und Klarlacken sowie von Füllern mit Hilfe von Lackierrobotern oder Lackieranlagen, zum Beispiel auch unter elektrostatischer Aufladung des Lacks (ESTA-Verfahren) zum Einsatz.

Gemäß einer Weiterbildung handelt es sich bei dem Beschichtungsmittel um einen Lack, insbesondere um einen Wasser- oder Lösemittellack. Derartige Beschichtungsmittel kommen im Kraftfahrzeugbereich oftmals zur Beschichtung von Karossen zum Einsatz.

In einer vorteilhaften Ausgestaltung der erfindungsgemäßen Prüfvorrichtung handelt es sich bei dem Prüfmittel um eine Flüssigkeit. Die Verwendung einer Flüssigkeit als Prüfmittel erlaubt es, das im eigentlichen Produktionsbetrieb zum Einsatz kommende Beschichtungsmittel, durch ein Medium mit ähnlichen strömungsmechanischen Eigenschaften zu ersetzen, insbesondere wenn es sich bei dem Beschichtungsmittel um einen Nasslack handelt. Die Zerstäubereinrichtung kann somit annähernd bei Einsatzbedingungen auf ihre Funktionsfähigkeit hin überprüft werden, wodurch das Testergebnis zusätzlich an Aussagekraft und Belastbarkeit gewinnt.

Bei einer typischen Weiterbildung beinhaltet das Prüfmittel Wasser, insbesondere vollentsalztes Wasser. Wasser bietet als Prüfmittel den Vorteil, dass es im Vergleich zu dem eigentlichen Beschichtungsmittel kostengünstig erhältlich ist, einen ausgiebigen Testbetrieb erlaubt und zugleich die Umweltbelastungen vermindert und eine Gesundheitsgefährdung des Bedienpersonals der Vorrichtung vermieden werden. Ein Verschmutzen der Prüfmittel-Zuführeinrichtung, des Prüfbehältnisses und anderer Bauelemente der Prüfvorrichtung durch Beschichtungsmittel wie etwa Lacke wird umgangen, der Aufwand für die Reinigung der Prüfvorrichtung nach einem Prüfbetrieb der Zerstäubereinrichtung kann klein gehalten werden. Weiterhin können durch die Verwendung von vollentsalztem Wasser, auch als VE-Wasser oder demineralisiertes Wasser bezeichnet, Ablagerungen, insbesondere auch Kalkablagerungen, wie sie bei einer Verwendung von gewöhnlichem Leitungswasser auftreten können, in der Prüfmittel-Zuführeinrichtung, dem Prüfbehältnis und an anderen Bauteilen der Prüfvorrichtung, sowie in der Zerstäubereinrichtung vermieden werden. Ein Ausfall der Prüfvorrichtung oder der Zerstäubereinrichtung aufgrund derartiger Ablagerungen kann somit verhindert werden.

Gemäß einer Weiterbildung der Erfindung handelt es sich bei dem Prüfmittel im Wesentlichen um Wasser, insbesondere um vollentsalztes Wasser, was besonders kostengünstig ist und nicht zu Umweltbelastungen oder zu einer Gefährdung des Bedienpersonals führt.

Gemäß einer Weiterbildung des erfindungsgemäßen Prüfverfahrens wird die Zerstäubereinrichtung, welche mittels der Aufnahmeeinrichtung aufgenommen wird, mit einem Rotationszerstäuber, insbesondere einem pneumatisch angetriebenen Hochgeschwindigkeits-Rotationszerstäuber, mit einem drehbaren Applikationskörper, insbesondere einem Glockenteller, ausgebildet und weist eine Welle auf, an welcher der Applikationskörper befestigt wird. Derartige Zerstäubereinrichtungen kommen insbesondere beim Lackieren von Fahrzeugkarossen mit Hilfe von Lackierrobotern oder Lackieranlagen, beispielsweise auch unter elektrostatischer Aufladung des Lacks (ESTA-Verfahren) zum Einsatz.

Bei einer weiteren Ausgestaltung des erfindungsgemäßen Prüfverfahrens wird während des Prüfbetriebes der aufgenommenen Zerstäubereinrichtung nach dem vorbestimmten Prüfprogramm ein erster Teilprüfbetrieb der aufgenommenen Zerstäubereinrichtung durchgeführt. Hierbei wird der Applikationskörper vor dem Beginn des ersten Teilprüfbetriebes an der Welle der aufgenommenen Zerstäubereinrichtung befestigt. Auf diese Weise kann die Funktionsfähigkeit der Zerstäubereinrichtung mit montiertem Applikationskörper überprüft werden. Beispielsweise kann bei dieser Ausgestaltung des Verfahrens geprüft werden, ob das Prüfmittel mit Hilfe des sich drehenden Applikationskörpers in gewünschter Weise zerstäubt wird.

Bei einer bevorzugten Weiterbildung des erfindungsgemäßen Prüfverfahrens wird während des Prüfbetriebes der aufgenommenen Zerstäubereinrichtung nach dem vorbestimmten Prüfprogramm vor dem ersten Teilprüfbetrieb ein zweiter Teilprüfbetrieb der aufgenommenen Zerstäubereinrichtung durchgeführt. Hierbei wird der Applikationskörper nach der Beendigung des zweiten Teilprüfbetriebes an der Welle der aufgenommenen Zerstäubereinrichtung befestigt. Dies ist vorteilhaft, da auf diese Weise der zweite Teilprüfbetrieb ohne einen an der Welle der Zerstäubereinrichtung montierten Applikationskörper durchgeführt werden kann. Dadurch kann zunächst die Funktion der Zerstäubereinrichtung ohne Applikationskörper überprüft werden. Insbesondere kann auf diese Weise die Funktion beispielsweise einer Turbine, welche die Welle der Zerstäubereinrichtung antreiben kann, getestet und die erreichten Drehzahlen bei vermindertem Sicherheitsrisiko überprüft werden.

Gemäß einer weiteren vorteilhaften Weiterbildung wird vor dem ersten Teilprüfbetrieb und nach dem Befestigen des Applikationskörpers an der Welle der Zerstäubereinrichtung zunächst der Rundlauf des Applikationskörpers überprüft. Dies trägt dazu bei, die Gefahr eines selbständigen Lösens des Applikationskörpers weiter zu reduzieren.

In einer vorteilhaften Ausgestaltung wird während des Prüfbetriebes der aufgenommenen Zerstäubereinrichtung, insbesondere mittels eines Laserstrahls, welcher von einer mit der Welle verbundenen Reflektorscheibe reflektiert und von einem mit der Steuereinrichtung gekoppelten, optoelektronischen Sensor detektiert wird, wiederholt eine Ist-Drehzahl der Welle ermittelt. Dadurch kann das Drehzahlverhalten einer Turbine, einer Welle und eines Applikationskörpers der Zerstäubereinrichtung überwacht werden. Ferner ist die Kenntnis der Ist-Drehzahl für eine Drehzahlregelung nützlich.

In einer weiteren, typischen Ausgestaltung wird während der Ausführung des vorbestimmten Prüfprogramms eine Soll-Drehzahl der Welle nach einem vorbestimmten Schema variiert und/oder konstant gehalten. Insbesondere wird die Soll-Drehzahl stufenweise gesteigert. Zusätzlich oder alternativ hierzu wird bei dieser Ausgestaltung die ermittelte Ist-Drehzahl während des Prüfbetriebes wiederholt mit der Soll-Drehzahl der Welle verglichen. Das Drehzahlverhalten von Turbine, Welle und Applikationskörper kann dadurch über einen gewissen Drehzahlbereich hinweg getestet werden, wodurch das Prüfergebnis noch an Aussagekraft gewinnt.

Bei einer bevorzugten Weiterbildung des erfindungsgemäßen Prüfverfahrens wird während der Ausführung des vorbestimmten Prüfprogramms die aufgenommene Zerstäubereinrichtung mittels der Steuereinrichtung in der Weise angesteuert, dass durch diese Ansteuerung zumindest ein Teil eines Betriebsablaufs während des Auftragens eines Beschichtungsmittels mittels der zu prüfenden Zerstäubereinrichtung auf ein Erzeugnis und/oder während eines Spülvorgangs der zu prüfenden Zerstäubereinrichtung nachgebildet wird. Auf diese Weise kann vorteilhaft überprüft werden, ob die Zerstäubereinrichtung während eines einsatzgetreu nachgestellten Betriebsablaufs ihre volle Funktionsfähigkeit besitzt. Damit kann die Belastbarkeit des mittels des Prüfverfahrens erzielten Testergebnisses noch weiter gesteigert werden.

In einer vorteilhaften Ausgestaltung des erfindungsgemäßen Prüfverfahrens wird als Prüfmittel ein Wasser, insbesondere vollentsalztes Wasser, beinhaltendes Mittel verwendet.

Die obigen Ausgestaltungen und Weiterbildungen lassen sich, sofern sinnvoll, beliebig miteinander kombinieren. Weitere mögliche Ausgestaltungen, Weiterbildungen und lmplementierungen der Erfindung umfassen auch nicht explizit genannte Kombinationen von zuvor oder im Folgenden bezüglich der Ausführungsbeispiele beschriebenen Merkmalen der Erfindung. Insbesondere wird der Fachmann auch Einzelaspekte als Verbesserungen oder Ergänzungen zu der jeweiligen Grundform der vorliegenden Erfindung hinzufügen.

### ZEICHNUNGEN

Die vorliegende Erfindung wird im Folgenden anhand von Ausführungsbeispielen unter Bezugnahme auf die beiliegenden Figuren der Zeichnung näher erläutert.

Von den Figuren zeigen:
- Figur 1: ein schematisches Blockdiagramm einer Prüfvorrichtung zum Prüfen der Funktionsfähigkeit einer Zerstäubereinrichtung zum Aufbringen eines Beschichtungsmittels gemäß einem ersten Ausführungsbeispiel der Erfindung;
- Figur 2: ein schematisches Blockdiagramm einer Prüfvorrichtung gemäß einem zweiten Ausführungsbeispiel;
- Figur 3: eine perspektivische Darstellung einer Prüfvorrichtung gemäß einem dritten Ausführungsbeispiel in einer Vorderansicht;
- Figur 4: eine perspektivische Ansicht eines Teils eines Innenraumes eines Prüfbehältnisses der Prüfvorrichtung gemäß Fig. 3 mit einer Aufnahmeeinrichtung mit zwei Flanschen für eine Kopplung mit jeweils einer Zerstäubereinrichtung;
- Figur 5: eine perspektivische Ansicht des Teils des Innenraums des Prüfbehältnisses gemäß der Fig. 4, wobei an einem der beiden Flansche eine Zerstäubereinrichtung in Gestalt eines Rotationszerstäubers befestigt ist;
- Figur 6: eine perspektivische Ansicht des Teils des Innenraums des Prüfbehältnisses gemäß der Fig. 4, wobei an dem anderen der beiden Flansche eine Zerstäubereinrichtung in Gestalt eines Rotationszerstäubers einer anderen Bauart befestigt ist;
- Figur 7: eine perspektivische Teilansicht der Prüfvorrichtung gemäß dem dritten Ausführungsbeispiel, wie sie in Fig. 3 gezeigt ist, wobei das Prüf- behältnis mit einigen darin angeordneten Bauelementen in einer Nahaufnahme dargestellt ist;
- Figur 8: eine Detailansicht des Innenraums des Prüfbehältnisses der Prüfvorrichtung gemäß Fig. 3;
- Figur 9: ein schematisches und vereinfachtes Blockdiagramm zur Erläuterung der Druckluft- und Prüfmittelzufuhr sowie der Ermittlung einer Ist-Drehzahl bei der Prüfvorrichtung gemäß dem dritten Ausführungsbeispiel;
- Figur 10: eine Darstellung eines ersten Teils eines pneumatischen Schaltbildes der Prüfvorrichtung gemäß Fig. 3;
- Figur 11: eine Darstellung eines zweiten Teils eines pneumatischen Schaltbildes der Prüfvorrichtung gemäß Fig. 3, welcher an den ersten Teil des pneumatischen Schaltbildes in Fig. 10 anschließt;
- Figur 12: eine Darstellung eines dritten Teils eines pneumatischen Schaltbildes der Vorrichtung gemäß Fig. 3, welcher an den zweiten Teil des pneumatischen Schaltbildes in Fig. 11 anschließt;
- Figur 13: ein schematisches Schaltbild der Prüfmittel-Zuführeinrichtung der Prüfvorrichtung der Fig. 3;
- Figur 14: eine schematische Darstellung eines oberen Teils des geöffneten Schaltschranks der Prüfvorrichtung gemäß Fig. 3;
- Figur 15: einen beispielhaften Ist-Drehzahlverlauf während eines Prüfbetriebs eines Rotationszerstäubers; und
- Figur 16: ein Flussdiagramm eines Ausführungsbeispiels des erfindungsgemäßen Prüfverfahrens.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

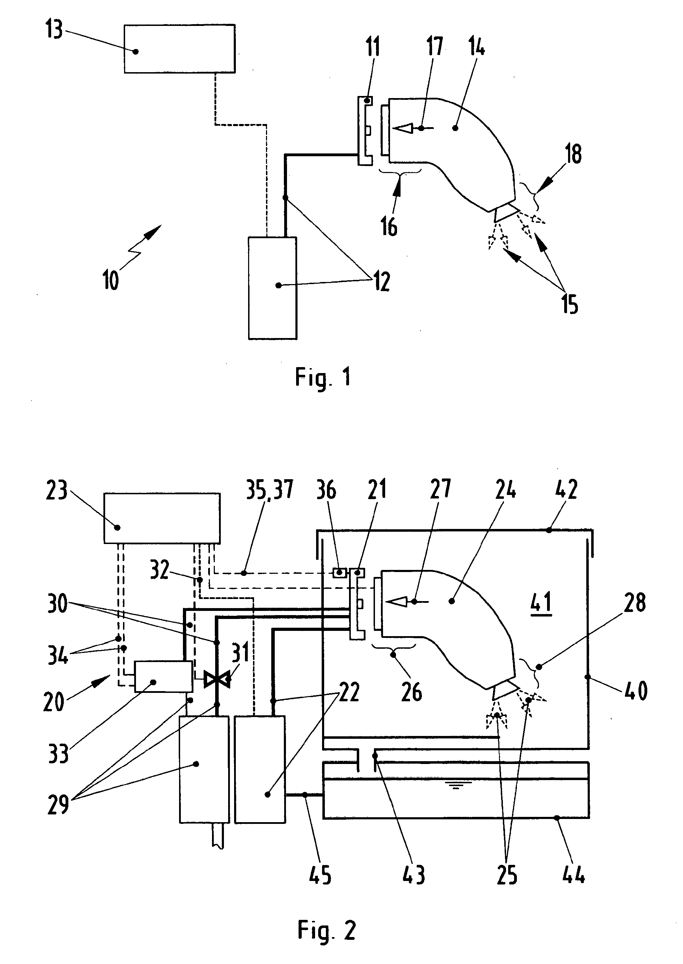

Figur 1 zeigt ein erstes Ausführungsbeispiel einer erfindungsgemäßen Prüfvorrichtung 10 schematisch in einem Blockschaltbild. Die Prüfvorrichtung 10 weist eine Aufnahmeeinrichtung 11, eine mit der Aufnahmeeinrichtung 11 gekoppelte Prüfmittel-Zuführeinrichtung 12 und eine Steuereinrichtung 13 auf. Die Prüfvorrichtung 10 dient dem Prüfen der Funktionsfähigkeit einer Zerstäubereinrichtung 14 zum Aufbringen eines Beschichtungsmittels, wobei es sich bei dem Beschichtungsmittel beispielsweise um einen Lack zum Auftragen auf eine Kraftfahrzeugkarosse handeln kann. Für einen Prüfbetrieb der Zerstäubereinrichtung 14 mittels der Prüfvorrichtung 10 kommt ein Prüfmittel 15 zur Verwendung, welches an die Stelle des Beschichtungsmittels tritt.

Wie Figur 1 zeigt, ist die Aufnahmeeinrichtung 11 zur Aufnahme der zu prüfenden Zerstäubereinrichtung 14 ausgebildet. Dies kann zum Beispiel durch teilweises Einsetzen eines geeignet ausgebildeten Endabschnitts 16 der Zerstäubereinrichtung 14 von vorne in die Aufnahmeeinrichtung 11 geschehen, wie in Figur 1 durch einen Pfeil 17 angedeutet ist. So kann beispielsweise die Aufnahmeeinrichtung 11 derart ausgebildet sein, dass sie die Zerstäubereinrichtung 14 im Wesentlichen in ähnlicher Weise aufnimmt wie eine entsprechende Aufnahmeeinrichtung einer Lackiermaschine oder eines Lackierroboters. Zum Zuführen des zu zerstäubenden Prüfmittels 15 zu der aufgenommenen Zerstäubereinrichtung 14 ist die Prüfmittel-Zuführeinrichtung 12 mit der Aufnahmeeinrichtung 11 gekoppelt.

Wenn die Zerstäubereinrichtung 14 in der Aufnahmeeinrichtung 11 aufgenommen ist, so befindet sie sich in einem vorbestimmten Betriebszustand, in dem der Prüfbetrieb der Zerstäubereinrichtung 14 erfolgen kann. Nach der Aufnahme in der Aufnahmeeinrichtung 11 kann somit wenigstens eine vorbestimmte Funktion der Zerstäubereinrichtung 14 überprüft werden. Beispielsweise kann ein probeweises Zerstäuben von Prüfmittel 15 erfolgen, dieses tritt in diesem Fall aus einem Abschnitt 18 der Zerstäubereinrichtung 14 aus. Zur Durchführung des Prüfbetriebs nach einem vorbestimmten Prüfprogramm ist die Steuereinrichtung 13 vorgesehen.

Ein zweites Ausführungsbeispiel der erfindungsgemäßen Prüfvorrichtung wird nun unter Bezugnahme auf die ebenfalls schematische Figur 2 erläutert. Die in Figur 2 gezeigte Prüfvorrichtung 20 weist ebenfalls eine Aufnahmeeinrichtung 21, eine Prüfmittel-Zuführeinrichtung 22 und eine Steuereinrichtung 23 auf. Wie bereits vorstehend in Bezug auf die Prüfvorrichtung 10 der Figur 1 erläutert, ermöglicht die Prüfvorrichtung 20 das Prüfen einer Zerstäubereinrichtung 24, wobei mittels der Prüfmittel-Zuführeinrichtung 22 ein Prüfmittel 25 zugeführt wird. Nach dem Aufnehmen der Zerstäubereinrichtung 24, beispielsweise mit einem Endabschnitt 26 in einer durch Pfeil 27 angedeuteten Richtung, in der Aufnahmeeinrichtung 21, kann ein Prüfbetrieb der Zerstäubereinrichtung 24 erfolgen, wobei zerstäubtes Prüfmittel 25 aus einem Abschnitt 28 der Zerstäubereinrichtung 24 austreten kann.

Ferner weist die Prüfvorrichtung 20 gemäß dem zweiten Ausführungsbeispiel eine Druckluft-Zuführeinrichtung 29 zum Zuführen von Druckluft zu der aufgenommenen Zerstäubereinrichtung 24 mittels mehrerer Druckluftleitungen 30 auf. In Figur 2 sind lediglich beispielhaft zwei Druckluftleitungen 30 eingezeichnet. Die Druckluft-Zuführeinrichtung 29 mit den Druckluftleitungen 30 ist ebenfalls mit der Aufnahmeeinrichtung 21 gekoppelt. Um eine Möglichkeit zum Regulieren und zum Absperren des Druckluftstroms in einer ersten der beiden Druckluftleitungen 30 bereitzustellen, ist in dieser Druckluftleitung 30 ein mittels der Steuereinrichtung 23 betätigbares Ventil 31 vorgesehen. Das Ventil 31 ist zu diesem Zweck mittels einer Signalleitung 32 mit der Steuereinrichtung 23 gekoppelt.

Weiterhin ist in der zweiten der beiden Druckluftleitungen 30 eine Luftmengenregeleinrichtung 33 vorgesehen. Die Luftmengenregeleinrichtung 33 dient zur Regelung einer die zweite der beiden Druckluftleitungen 30 durchströmenden Luftmenge in Abhängigkeit von einer durch die Steuereinrichtung 23 bereitgestellten Ist-Größe und einer ebenfalls durch die Steuereinrichtung 23 bereitgestellten zugehörigen Soll-Größe. Die Steuereinrichtung 23 ist hierzu bei dem gezeigten zweiten Ausführungsbeispiel mittels Signalleitungen 34 mit der Luftmengenregeleinrichtung 33 gekoppelt.

Die Aufnahmeeinrichtung 21 der in Figur 2 gezeigten Prüfvorrichtung 20 weist darüber hinaus eine mit der Steuereinrichtung 23 mittels einer Signalleitung 35 gekoppelte Detektionseinrichtung 36 auf. Die Detektionseinrichtung 36 kann vorteilhaft als ein Näherungsschalter ausgebildet sein und ermöglicht eine Erfassung der Position der zu prüfenden Zerstäubereinrichtung 24. Um beispielsweise zu vermeiden, dass Druckluft und/oder Prüfmittel zu der Aufnahmeeinrichtung 21 zugeführt werden, während ein Bediener der Prüfvorrichtung 20 noch mit dem Einsetzen der Zerstäubereinrichtung 24 in die Aufnahmeeinrichtung 21 beschäftigt ist, ist vorgesehen, dass die Detektionseinrichtung 36 ein Signal 37 an die Steuereinrichtung 23 übermittelt, wenn die Zerstäubereinrichtung 24 eine vorbestimmte Position in Bezug auf die Aufnahmeeinrichtung 21 erreicht hat. Es ist vorteilhaft, wenn die Detektionseinrichtung 36 dieses Signal 37 erst dann an die Steuereinrichtung 23 übermittelt, wenn die Zerstäubereinrichtung 24 in der Aufnahmeeinrichtung 21 derart aufgenommen ist, dass ein sicherer Prüfbetrieb erfolgen kann. Weiterhin ist vorgesehen, dass die Steuereinrichtung 23 einen Prüfbetrieb der aufgenommenen Zerstäubereinrichtung 24 zum Prüfen einer vorbestimmten Funktion der Zerstäubereinrichtung 24 nach dem Erhalt dieses Signals ermöglicht. Auf die beschriebene Weise kann die Arbeitssicherheit für einen Bediener der Prüfvorrichtung 20 verbessert werden.

Wie Figur 2 weiter zeigt, ist außerdem ein Prüfbehältnis 40 zum Auffangen des während des Prüfbetriebs der Zerstäubereinrichtung 24 zerstäubten Prüfmittels 25 vorgesehen. Die Aufnahmeeinrichtung 21 ist hierbei derart innerhalb eines Innenraums 41 des Prüfbehältnisses 40 angeordnet, dass sich die aufgenommene Zerstäubereinrichtung 24 vollständig innerhalb des Prüfbehältnisses 40 befindet. Die Zerstäubereinrichtung 24 ragt somit nicht aus dem Innenraum 41 heraus. Bei dem gezeigten zweiten Ausführungsbeispiel der Prüfvorrichtung ist das Prüfbehältnis 40 in etwa kastenförmig ausgebildet. Eine obere der den Innenraum 41 begrenzenden Wände des Prüfbehältnisses 40 ist als eine öffenbare und schließbare Abdeckung 42 ausgebildet. In geöffnetem Zustand ermöglicht die Abdeckung 42 dem Bedienpersonal der Prüfvorrichtung 20 einen Zugang zu dem Innenraum 41, so dass die Zerstäubereinrichtung 24 zur Aufnahme in der Aufnahmeeinrichtung 21 in den Innenraum 41 eingebracht werden kann. Unterhalb des Prüfbehältnisses 40 ist, wie Figur 2 weiter zeigt, ein mit dem Prüfbehältnis 40 mittels einer Abflussleitung 43 in Fluidverbindung stehendes Prüfmittelbehältnis 44 vorgesehen. Das Prüfmittelbehältnis 44 steht ferner mit der Prüfmittel-Zuführeinrichtung 22 mittels einer Rückleitung 45 in Fluidverbindung und dient dem Vorhalten einer vorbestimmten Menge an Prüfmittel 25. Das beschriebene Prüfbehältnis 40 mit der Abdeckung 42 und der Abflussleitung 43 ermöglicht es somit zum einen, das zerstäubte und in dem Innenraum 41 versprühte Prüfmittel 25 möglichst vollständig wieder aufzufangen, zu sammeln und über die Abflussleitung 43 in das Prüfmittelbehältnis 44 zurückzuleiten. Durch die Abdeckung 42 wird die Umgebung der Prüfvorrichtung 20 während des Prüfbetriebs der Zerstäubereinrichtung 24 nicht durch unkontrolliertes Herausspritzen des Prüfmittels 25 aus dem Prüfbehältnis 40 verunreinigt. Außerdem kann das Bedienpersonal der Prüfvorrichtung 20 vorteilhaft vor dem zerstäubten Prüfmittel 25 geschützt und somit die Arbeitssicherheit verbessert werden. Sollte es trotz sorgfältigem Zusammenbau und gewissenhafter Montage der Zerstäubereinrichtung 24 zu einer Funktionsstörung derselben kommen, bei der sich Bauteile der Zerstäubereinrichtung 24 von dieser mit möglicherweise hoher Geschwindigkeit lösen, so können derartige umherfliegende Bauteile, beispielsweise ein sich ablösender Glockenteller eines Rotationszerstäubers, von dem Prüfbehältnis 40 und der Abdeckung 42 zurückgehalten werden, ohne den Bediener der Prüfvorrichtung 20 zu verletzen. Das mit dem Prüfbehältnis 40 in Fluidverbindung stehende Prüfmittelbehältnis 44 erlaubt vorteilhaft eine Wiederverwendung bereits zerstäubten Prüfmittels 25. Das in dem Prüfbehältnis 40 versprühte Prüfmittel 25 wird hierzu durch die Abflussleitung 43 in das Prüfmittelbehältnis 44 zurückgeführt und von diesem über die Rückleitung 45 mittels der Prüfmittel-Zuführ-Einrichtung 22 der Zerstäubereinrichtung 24 erneut zugeführt.

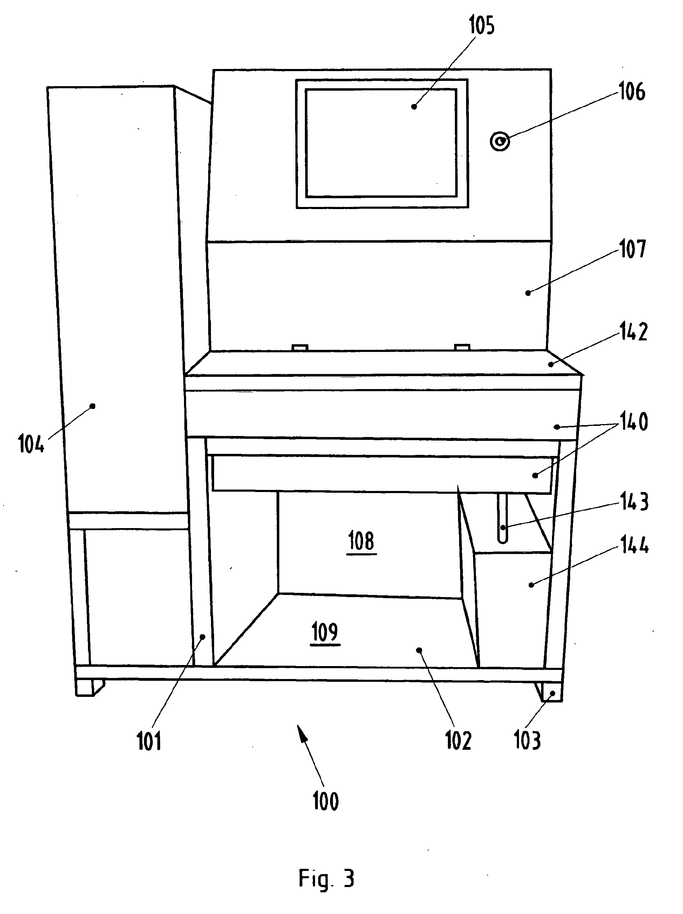

Figur 3 zeigt ein drittes Ausführungsbeispiel einer Prüfvorrichtung in einer perspektivischen Darstellung von vorne. Die Prüfvorrichtung 100 ist mit Rahmenprofilen 101 und Plattenelementen 102 gebildet. Insbesondere werden Aluminium-Strangpressprofile 101 zum Aufbau eines Rahmens der Prüfvorrichtung 100 verwendet, wobei die freien Felder des Rahmens an den gewünschten Stellen mit Platten verschlossen werden. An der Unterseite des Rahmens sind bei dem gezeigten Ausführungsbeispiel Standfüße 103 vorgesehen, welche auch in Gestalt beispielsweise von feststellbaren Rollen oder Rädern ausgebildet sein können. Weiterhin ist, wie in Figur 3 gezeigt, ein Schaltschrank 104 zur Aufnahme der Komponenten einer Steuerungseinrichtung und zur Aufnahme der spannungsführenden Bauteile der Prüfvorrichtung 100 vorgesehen. Die Bedienung der Prüfvorrichtung 100 erfolgt mittels eines Computers mit berührungsempfindlichem Monitor, im Folgenden als Touch-Panel-PC 105 bezeichnet. In gut erreichbarer Position neben dem Touch-Panel-PC 105 ist ein Not-Aus-Taster 106 angebracht, welcher die schnelle Abschaltung der Prüfvorrichtung 100 in Notfällen ermöglicht. In einem in der Vorderansicht ebenfalls von einer Platte verschlossenen Pneumatikbereich 107 unterhalb des Touch-Panel-PCs 105 sind eine Reihe von in Figur 3 nicht dargestellten pneumatischen Bauteilen der Prüfvorrichtung 100 angeordnet. Vor und etwas unterhalb des Pneumatikbereichs 107 ist ein Prüfbehältnis 140 angeordnet, das hier beispielhaft in Gestalt einer langgestreckten, an dem Rahmen der Prüfvorrichtung 100 befestigten Wanne ausgeführt ist. Die Wanne ist bevorzugt aus einem hochlegierten korrosionsbeständigen Stahl, beispielsweise einem austenitischen Stahl der Sorten V2A (X 5 CrNi 18 10) oder V4A (X 5 CrNiMo 17 12 2), gefertigt. Das Prüfbehältnis 140 ist in Figur 3 an seiner Oberseite von einer Abdeckung 142 verschlossen. Um einen Zugang zu einem hier nicht sichtbaren Innenraum 141 des Prüfbehältnisses 140 zu erlangen, kann die Abdeckung 142 durch Aufklappen nach oben geöffnet werden. Die Abdeckung 142 des Prüfbehältnisses 140 ist vorzugsweise transparent ausgebildet, um die in dem Prüfbehältnis 140 ablaufenden Vorgänge bei geschlossener Abdeckung 142 gut beobachten zu können. Bei dem Ausführungsbeispiel gemäß Figur 3 besitzt die Abdeckung 142 im Wesentlichen die Gestalt einer ebenen Platte, welche aus Gründen des Spritzschutzes bevorzugt einen nach unten gebogenen Rand aufweist, eine Stärke von etwa 8 mm aufweist und aus transparentem Polycarbonat hergestellt ist. Polycarbonat ist wegen seiner günstigen mechanischen Eigenschaften und seiner Wasserbeständigkeit gut für den hier beschriebenen Einsatz geeignet.

Unterhalb des Prüfbehältnisses 140 ist in dem Rahmen der Prüfvorrichtung 100 ein Prüfmittelbereich 108 gebildet. In dem Prüfmittelbereich 108 ist ein Prüfmittelbehältnis 144 unterhalb einer Abflussleitung 143 des Prüfbehältnisses 140 angeordnet. Darüber hinaus ist in dem Prüfmittelbereich 108 auch eine Ablagefläche 109 zum Ablegen von Werkzeug oder von zu prüfenden oder bereits geprüften Zerstäubereinrichtungen 124 vorgesehen.

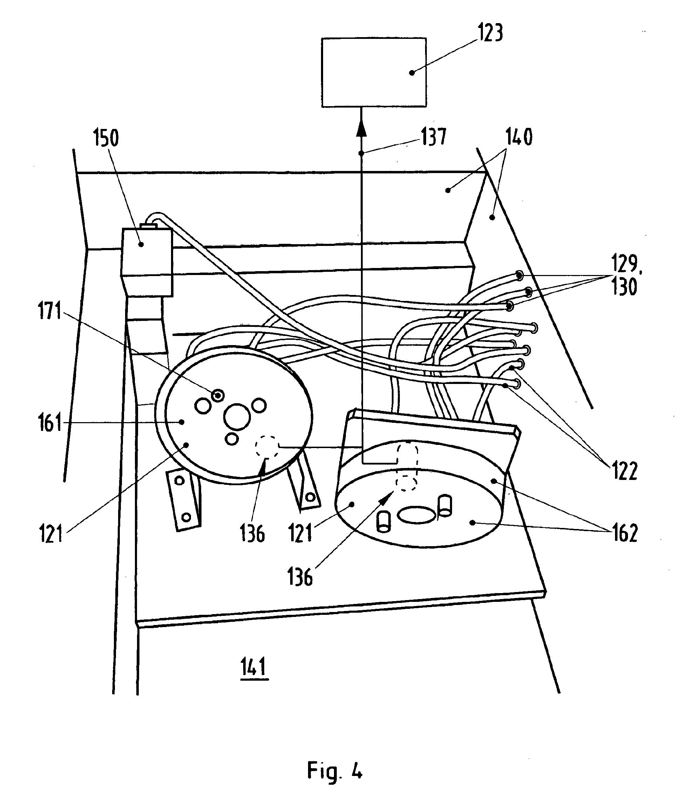

In Figur 4 ist eine perspektivische Ansicht eines Teils eines Innenraumes 141 des Prüfbehältnisses 140 der Prüfvorrichtung 100 gemäß Fig. 3 bei geöffneter Abdeckung 142 dargestellt. In dem gezeigten Teil des Innenraums 141 ist eine Aufnahmeeinrichtung 121 zur Aufnahme von hier nicht abgebildeten Zerstäubereinrichtungen angeordnet. Bei dem gezeigten Ausführungsbeispiel weist die Aufnahmeeinrichtung 121 als Schnittstellen zwei mit zugeordneten Gegenstücken zweier Zerstäubereinrichtungen unterschiedlicher Bauart verbindbare Flansche 161, 162 auf. Der linke Flansch 161 ist mit einem Rotationszerstäuber zum Aufbringen von Klarlack bzw. Decklack mittels eines Lackierroboters, nachfolgend auch als CC-Zerstäuber bezeichnet, verbindbar, während der rechte Flansch 162 mit einem Rotationszerstäuber zum Aufbringen von Füllerlack mittels einer Lackiermaschine im ESTA-Verfahren, also unter elektrostatischer Aufladung des Lacks, nachfolgend als ESTA-Zerstäuber bezeichnet, ausgebildet ist. Beide Flansche 161, 162 sind bei der gezeigten Prüfvorrichtung 100 derart in dem Innenraum 141 angeordnet und befestigt, dass zu einem vorbestimmten Zeitpunkt nur einer der beiden Flansche einen zugeordneten Zerstäuber aufnehmen kann. Dies bedeutet, bei dem gezeigten Ausführungsbeispiel verhindert die Anordnung der Flansche 161, 162 eine gleichzeitige Aufnahme eines CC- und eines ESTA-Zerstäubers. Mit den Flanschen 161, 162 sind Prüfmittelleitungen einer Prüfmittel-Zuführeinrichtung 122 und Druckluftleitungen 130 einer Druckluft-Zuführeinrichtung 129 gekoppelt. Ferner ist an jedem der beiden Flansche 161, 162 eine Detektionseinrichtung 136 vorgesehen, die wie zu der Detektionseinrichtung 36 der Prüfvorrichtung 20 gemäß Figur 2 ausgebildet ist. Die in Figur 4 gestrichelt angedeutete Detektionseinrichtung 136 ist mit der Steuereinrichtung 123 gekoppelt und kann ein Signal 137 an diese übermitteln. Ferner ist in dem Innenraum 141 des Prüfbehältnisses 140 auch ein Sicherheitsschalter 150 vorgesehen. Ein nicht dargestelltes Schaltergegenstück 151 des Sicherheitsschalters 150 ist an der öffen- und schließbaren Abdeckung 142 derart befestigt, dass das Schaltergegenstück 151 beim Schließen der Abdeckung 142 in eine Öffnung des Sicherheitsschalters 150 eingeführt werden kann und bei geschlossener Abdeckung 142 dort einrastet.

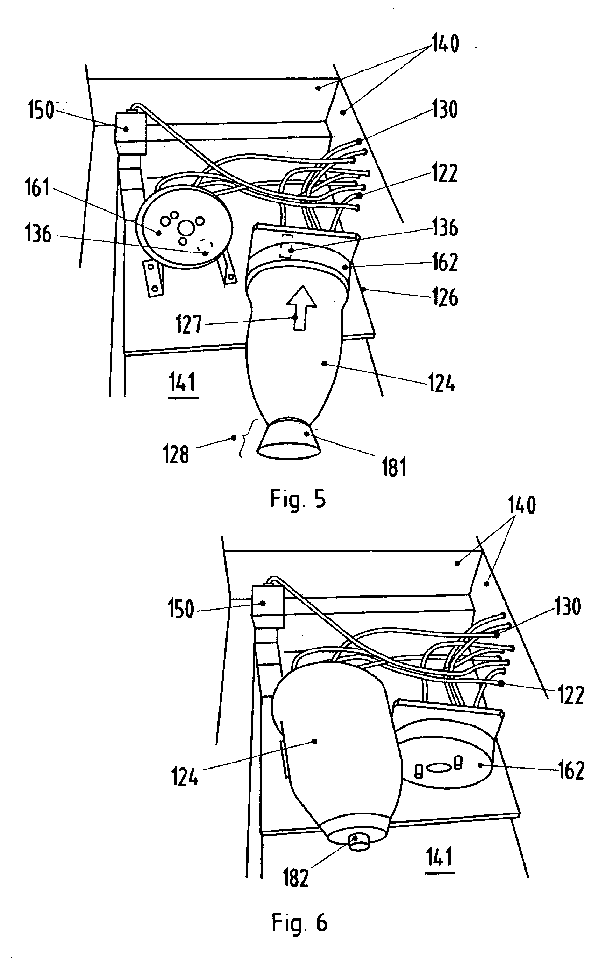

Figur 5 zeigt den Teil des Innenraums 141 des Prüfbehältnisses 140 gemäß Fig. 4 in perspektivischer Ansicht. Hierbei ist nun an dem rechten Flansch 162 eine Zerstäubereinrichtung 124 in Gestalt eines pneumatisch angetriebenen Rotationszerstäubers für ESTA-Anlagen (ESTA-Zerstäuber) mit einem mit hoher Geschwindigkeit drehbaren Applikationskörper 181 befestigt. Das vorherige Aufnehmen der Zerstäubereinrichtung 124 mit einem Endabschnitt 126 erfolgte in Richtung des Pfeils 127. Wie aus Figur 5 ersichtlich wird, ragt die Zerstäubereinrichtung 124 mit dem Applikationskörper 181, mit dessen Hilfe bei einem Prüfbetrieb ein Prüfmittel zerstäubt werden kann, in den nicht dargestellten Teil des Innenraums 141 des Prüfbehältnisses 140 hinein. Im Bereich des Abschnitts 128 kann somit während des Prüfbetriebs Prüfmittel austreten. Bei geschlossener Abdeckung 142 kann das während des Prüfens zerstäubte Prüfmittel von dem Prüfbehältnis 140, einige dessen innerer Wände in den Figuren 4 bis 6 mit dem Bezugszeichen 140 versehen sind, aufgefangen werden.

Figur 6 zeigt erneut eine perspektivische Ansicht des Teils des Innenraums 141 des Prüfbehältnisses 140 gemäß der Fig. 4. Dabei ist nun an dem Flansch 161 eine Zerstäubereinrichtung 124 angebracht. Die Zerstäubereinrichtung 124, wie sie in Figur 6 gezeigt ist, ist von einer anderen Bauart als die in Figur 5 schematisch abgebildete, und ist hier als pneumatisch angetriebener Rotationszerstäuber für das Auftragen von Klarlack bzw. Decklack mittels eines Lackierroboters (CC-Zerstäuber) ausgebildet. Die in Figur 6 gezeigte Zerstäubereinrichtung 124 ist ebenfalls dafür ausgebildet, ein Beschichtungsmittel oder, während eines Prüfbetriebs mittels der Prüfvorrichtung 100, ein Prüfmittel, mittels eines schnell drehenden Applikationskörpers zu zerstäuben. Wie aus Figur 6 ersichtlich ist, weist die Zerstäubereinrichtung eine Welle 182 auf, die mit einer nicht gezeigten, pneumatisch angetriebenen Turbine gekoppelt ist. In dem hier gezeigten Zustand ist jedoch kein Applikationskörper 181 an der Welle 182 befestigt, um zunächst ohne den Applikationskörper die Funktion der Turbine während eines Prüfbetriebs testen zu können. Auch in Figur 6 weist die Sprührichtung der Zerstäubereinrichtung 124 von der Aufnahmeeinrichtung 121 weg zu dem nicht gezeigten Teil des Prüfbehältnisses 140 hin.

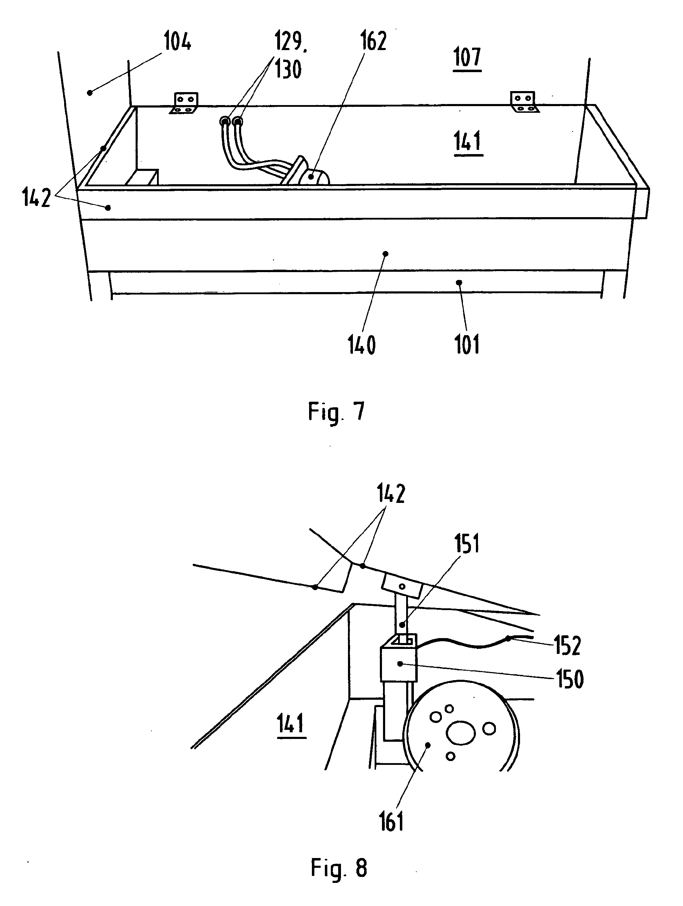

Ein Teil der Prüfvorrichtung 100 der Figur 3 ist in Figur 7 noch einmal vergrößert perspektivisch dargestellt, wobei der Blick nun mehr von oben auf das durch die Rahmenprofile 101 des Rahmens der Prüfvorrichtung 100 gehaltene Prüfbehältnis 140 gerichtet ist, so dass durch die transparent ausgebildete Abdeckung 142 einige in dem Innenraum 141 des Prüfbehältnisses 140 angeordnete Bauelemente sichtbar werden. Zusätzlich erkennt man in Figur 7 auch eine Seite des Schaltschrankes 104 sowie die Vorderseite des Pneumatikbereichs 107. In Figur 7 sind beispielhaft einer der Flansche 162 sowie zwei Druckluftleitungen 130 der Druckluft-Zuführ-Einrichtung 129 gezeigt, um deren Anordnung in dem Prüfbehältnis 140 zu verdeutlichen. Aus Gründen der Übersicht wurden der zweite Flansch 161 und weitere Bauelemente der Druckluft-Zuführeinrichtung 129 sowie die Prüfmittel-Zuführeinrichtung 122 in Figur 7 weggelassen.

Figur 8 zeigt eine Detailansicht des Innenraums 141 des Prüfbehältnisses 140 der Prüfvorrichtung 100 gemäß Fig. 3. Auch in dieser Ansicht ist ein Flansch 161 sichtbar. Leitungsverbindungen wurden in dieser Ansicht der Übersicht halber weggelassen, mit Ausnahme einer Signalleitung 152, welche die Steuereinrichtung 123 mit dem hier ebenfalls gezeigten Sicherheitsschalter 150 koppelt. Aus Figur 8 wird ersichtlich, wie das an der Unterseite der in dem gezeigten Zustand halboffenen Abdeckung 142 befestigte Schaltergegenstück 151 soeben in eine zugeordnete Öffnung des Sicherheitsschalters 152 eingreift. Beim vollständigen Schließen der Abdeckung 142 rastet das Schaltergegenstück 151 in dem Sicherheitsschalter 150 derart ein, dass die Abdeckung 142 mittels des Schaltergegenstücks 151 zugehalten wird und sich nur bei Ansteuerung des Sicherheitsschalters 150 durch die Steuereinrichtung 123 öffnen lässt.

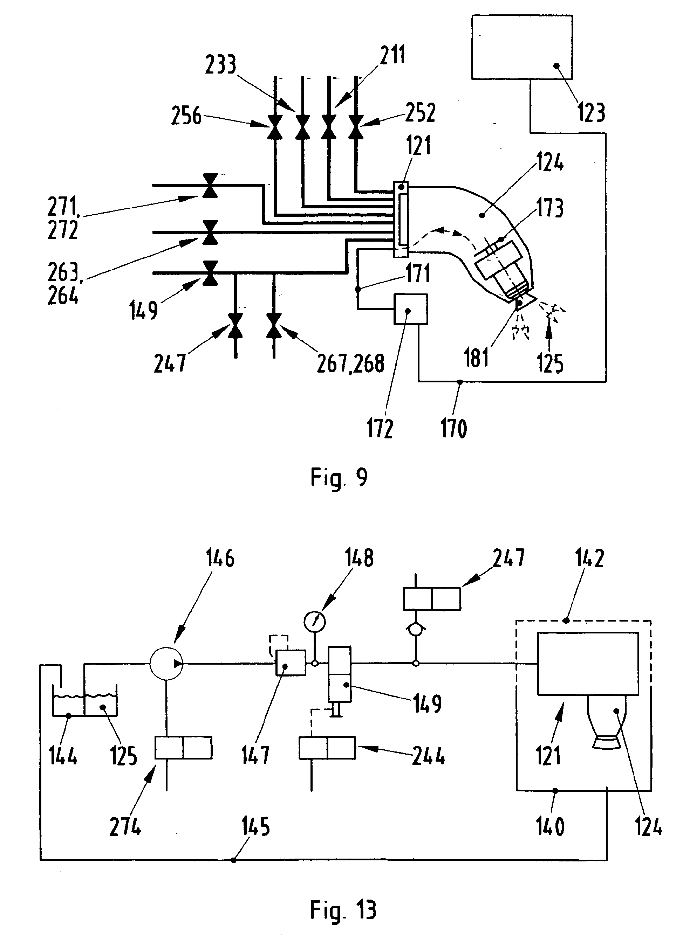

Aus Figur 9 ist ersichtlich, wie eine Messung der Ist-Drehzahl einer in der Aufnahmeeinrichtung 121 aufgenommenen Zerstäubereinrichtung 124 vorzugsweise erfolgen kann. Um die Ist-Drehzahl zu ermitteln, ist bei der Prüfvorrichtung 100 jedem Flansch 161, 162 ein optoelektronischer Sensor 172 zugeordnet. Aus Gründen der Übersichtlichkeit ist hier nur einer der beiden Sensoren 172 dargestellt. Der Sensor 172 ist mittels einer Signalleitung 170 mit der Steuereinrichtung 123 gekoppelt. Von dem optoelektronischen Sensor 172 wird über einen Lichtwellenleiter 171 ein Lasersignal in die Zerstäubereinrichtung 124 hineingesandt, wo es von einer mit der Welle rotierenden Reflektorscheibe 173 reflektiert wird. Die Ermittlung der Drehzahl erfolgt anhand des von der Reflektorscheibe 173 reflektierten Lasersignals. In Figur 4 ist am Beispiel des Flansches 161 ein Ende des Lichtwellenleiters 171 erkennbar.

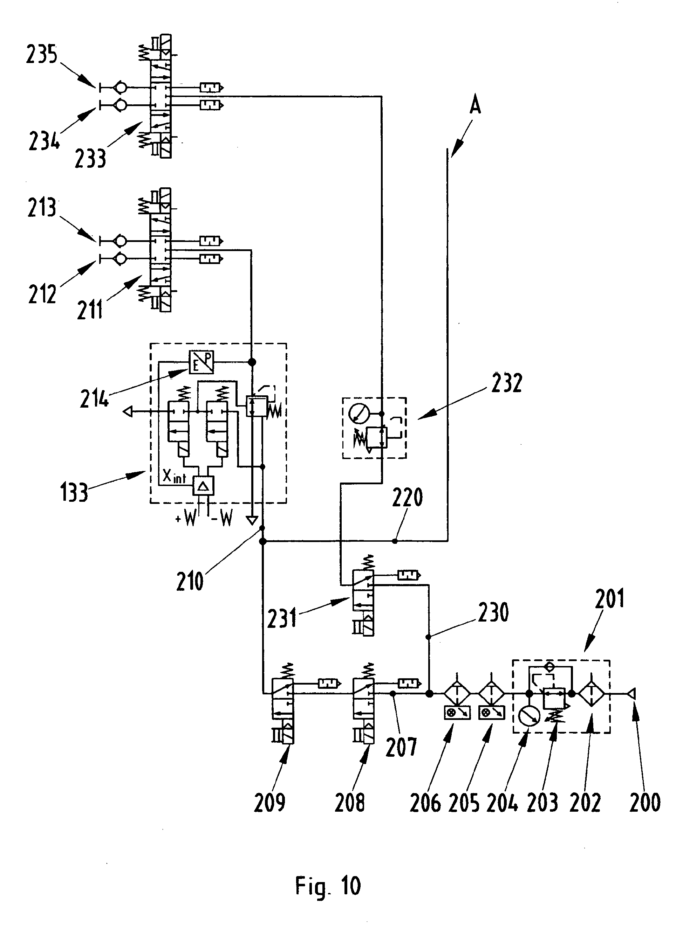

In den Figuren 10, 11 und 12 ist zur Verdeutlichung des pneumatischen Aufbaus ein pneumatisches Schaltbild der Prüfvorrichtung 100 gemäß Fig. 3 dargestellt. Aus Platzgründen ist das Schaltbild in drei Teile aufgeteilt, die in den Figuren 10, 11 bzw. 12 abgebildet sind. Das Schaltbild wurde zu diesem Zweck an den Trennstellen A und AA zweimal geteilt und ist gedanklich an diesen Stellen wieder zusammenzusetzen.

Ausgehend von einem Druckluftanschluss 200, mittels dem die Prüfvorrichtung 100 mit einer externen Druckluftversorgung, beispielsweise einem Druckluft-Hausnetz, verbunden werden kann, ist zunächst eine Aufbereitungseinheit 201 zur Aufbereitung der extern bereitgestellten Druckluft vorgesehen. Die Aufbereitung erfolgt bei der Prüfvorrichtung 100 durch Abscheiden von Flüssigkeiten und Filtern der Druckluft in einer Filter-Abscheider-Einheit 202. Daran anschließend ist ein Druckregler 203 vorgesehen. Bei dem gezeigten Ausführungsbeispiel wird durch den Druckregler 203 beispielsweise ein Druck von 6 bar bereitgestellt. Dies kann an einem angeschlossenen Manometer 204 überprüft werden. Auf die Aufbereitungseinheit 201 folgen weitere Filter-und Abscheiderstufen 205, 206.

Die Aufbereitungseinheit 201 und die Filter-Abscheider-Einheiten 205, 206 sind dazu vorgesehen, ein für die Versorgung eines pneumatisch betriebenen Rotationszerstäubers geeignete Druckluftqualität bereitzustellen. Vorzugsweise sind derartige Rotationszerstäuber mit Druckluft hoher Reinheit zu versorgen, beispielsweise mit Druckluft der Klasse 1 nach DIN ISO 8573-1. Um sicherzustellen, dass die Druckluft nur einen sehr geringen Gehalt an Wasser, Öl und Stäuben aufweist, kommen bei der gezeigten Prüfvorrichtung 100 mehrere Filterstufen 202, 205, 206 zum Einsatz.

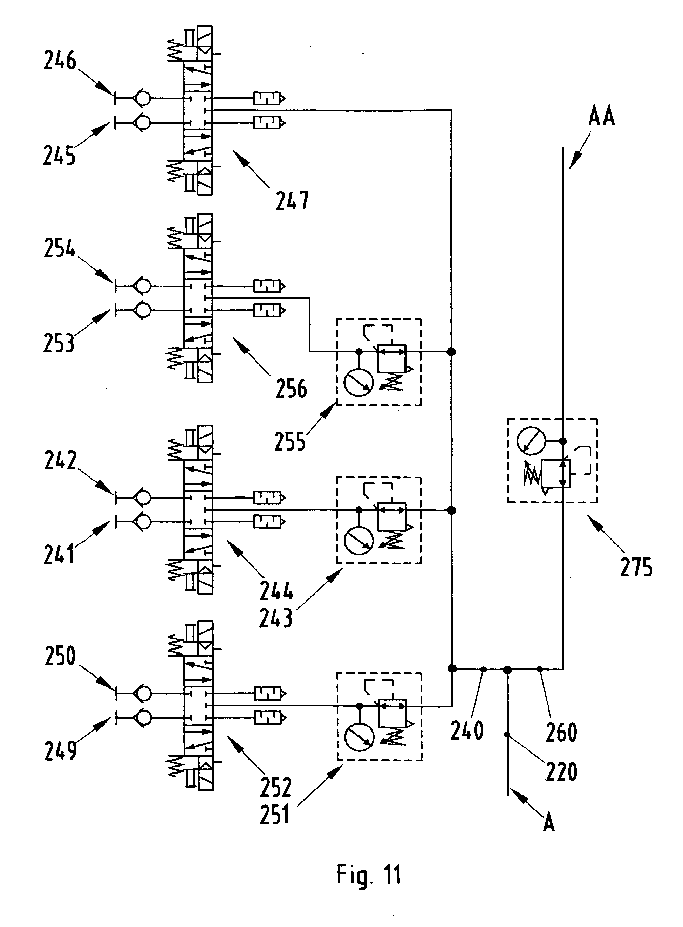

Stromab der Filterstufe 206 teilt sich der Luftstrom auf zwei Zweigleitungen auf, eine Zweigleitung 207 und eine Motorlagerluft-Zweigleitung 230. In der Zweigleitung 207 sind nacheinander ein erstes Hauptventil 208 und ein zweites Hauptventil 209 vorgesehen. Die Hauptventile 208, 209 sind hier als zwei 3/2-Wegeventile mit Sperr-Ruhestellung ausgebildet und können von der Steuereinrichtung 123 beispielsweise elektrisch betätigt werden. Stromab teilt sich die Leitung erneut in eine Zweigleitung 220 und eine Motorluft-Zweigleitung 210. Die Zweigleitung 220 wird unter Bezugnahme auf Figur 11 weiter beschrieben werden. In der Motorluft-Zweigleitung 210 ist nachfolgend eine Luftmengenregeleinrichtung 133, hier in Gestalt eines Proportionalregelventils ausgebildet, vorgesehen. Die Luftmengenregeleinrichtung 133 ist dazu vorgesehen, die der Zerstäubereinrichtung 124, welche als pneumatisch angetriebener Rotationszerstäuber ausgebildet sein kann, zugeführte Motorluftmenge derart zu regeln, dass eine beispielsweise durch die Steuereinrichtung 123 bereitgestellte Solldrehzahl des Applikationskörpers 181 der Zerstäubereinrichtung 124 erreicht wird. Daher kann die Luftmengenregeleinrichtung 133 auch als Drehzahlregeleinrichtung bezeichnet werden. Bei dem gezeigten Ausführungsbeispiel kommt als Drehzahlregel-Einrichtung beispielsweise ein Proportionalregelventil ("MSR-Gerät") 133 zum Einsatz. Das Proportionalregelventil 133 ist mittels eines so genannten Profibus mit einer als Teil der Steuereinrichtung 123 vorgesehenen speicherprogrammierbaren Steuerung (SPS) 305, welche noch beschrieben werden wird, gekoppelt, so dass ein Datenaustausch mit dieser erfolgen kann. Das Regelverhalten des Proportionalregelventils 133 entspricht im Wesentlichem dem eines PI-Regiers.

Stromab der Luftmengenregeleinrichtung 133 ist ein als federrückgestelltes 5/3-Wegeventil mit Sperr-Ruhestellung ausgebildetes Motorluft-Ventil 211 angeordnet. Ein Ansteuerung des Motorluft-Ventils 211 ermöglicht die wahlweise Versorgung eines an dem Flansch 161 befestigten CC-Zerstäubers 124 oder eines an dem Flansch 162 befestigten ESTA-Zerstäubers 124 mit Motorluft, um den Zerstäuber 124 anzutreiben. Zur Verbindung des jeweiligen Zerstäubers 124 mit den Ausgängen des Motorluft-Ventils 211 sind ein Motorluft-Anschluss 212 für den CC-Zerstäuber und ein Motorluft-Anschluss 213 für den ESTA-Zerstäuber vorgesehen.

In der Motorlagerluft-Zweigleitung 230 ist zunächst ein Motorlagerluft-Hauptventil 231 angeordnet, welches als 3/2-Wegeventil ausgebildet ist. Stromab davon ist ein Druckregelventil 232 mit einem Manometer zur Druckkontrolle vorgesehen. Über das Ansteuern eines Motorlagerluft-Ventils 233 wird den Motorlagerluft-Anschlüssen 234 und 235 für den CC- bzw. den ESTA-Zerstäuber wahlweise Motorlagerluft zugeführt. Weil bei einem pneumatisch angetriebenen Rotationszerstäuber die Turbine Schaden nehmen kann, wenn sie bei fehlender oder unzureichender Motorlagerluft betrieben wird, wird das Motorlagerluft-Ventil 233 bevorzugt durch die Steuereinrichtung 123 grundsätzlich derart angesteuert, dass eine aufgenommene Zerstäubereinrichtung mit hinreichend Motorlagerluft versorgt wird, wenn ein Prüfbetrieb der Zerstäubereinrichtung möglich ist. Bevorzugt beträgt der Druck der Motorlagerluft während des Prüfbetriebs zu jedem Zeitpunkt mindestens 5,5 bar. Damit kann auch verhindert werden, dass die Welle unerwartet blockiert. Ein Blockieren der Welle könnte zu einem unerwünschten Lösen des Applikationskörpers (Glockentellers) 181 von der Welle 182 führen.

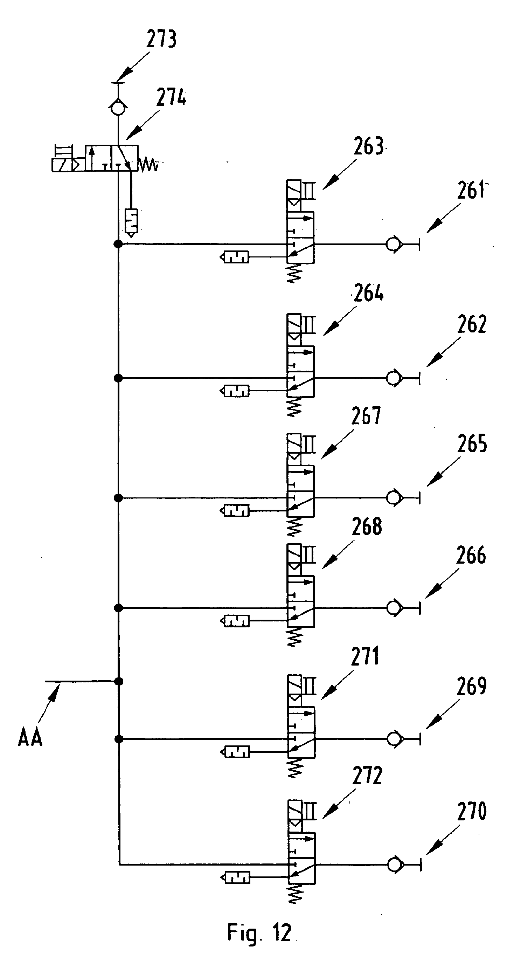

In Figur 11 ist der weitere Verlauf der Zweigleitung 220 ausgehend vom Punkt A dargestellt. Die Zweigleitung 220 teilt sich in eine Zweigleitung 240 und eine Zweigleitung 260 auf. In der Zweigleitung 260 ist ein Druckregelventil 275 zur Einstellung des an den nachfolgenden, in Figur 11 nicht dargestellten Steuerluftventilen anstehenden Drucks vorgesehen. Der weitere Verlauf der Zweigleitung 260 wird unter Bezugnahme auf Figur 12 beschrieben. In der Zweigleitung 240 sind in Parallelschaltung drei 5/3-Wegeventile 244, 252, 256 mit vorgeschalteten Druckregelventilen 243, 251, 255 vorgesehen. Das Prüfmittelluft-Ventil 244 stellt bei Ansteuerung mittels der Steuereinrichtung 123 über Prüfmittelluft-Anschlüsse 241, 242 Druckluft zur Ansteuerung des Prüfmittelventils 149 bereit, wie auch Figur 13 zu entnehmen ist. Das Lenkluft-Ventil 252 stellt bei Ansteuerung durch die Steuereinrichtung 123 Lenkluft über einen Lenkluft-Anschluss 249 für den CC-Zerstäuber und über einen Lenkluft-Anschluss 250 für den ESTA-Zerstäuber bereit. Das Bremsluft-Ventil 256 versorgt bei Betätigung den jeweils aufgenommenen Zerstäuber 124 über die Anschlüsse 253, 254 mit Bremsluft zum Abbremsen des Applikationskörpers 181. Ferner ist ein als 5/3-Wegeventil ausgebildetes Kurzspül-Ventil 247 vorgesehen, welches über die Kurzspülluft-Anschlüsse 245, 246 Kurzspülluft zum Austreiben des Prüfmittels aus der aufgenommenen Zerstäubereinrichtung bereitstellen kann.

Aus der Figur 12 ist der weitere Verlauf der Zweigleitung 260 ausgehend vom Punkt AA zu erkennen. Die Zweigleitung 260 versorgt die von der Steuereinrichtung 123 ansteuerbaren 3/2-Wegeventile 263, 264, 267, 268, 271, 272 und 274 mit Druckluft. Bei angesteuertem Prüfmittelpumpen-Ventil 274 wird die Prüfmittelpumpe 146 über einen Druckluftanschluss 273 mit Druckluft versorgt, um Prüfmittel 125 zu fördern, wie in Figur 13 genauer dargestellt. Die 3/2-Wegeventile 263, 264, 267, 268, 271 und 272 sind als Steuerluftventile zur Ansteuerung der in der Zerstäubereinrichtung selbst befindlichen Ventile, welche dem Zuführen von Beschichtungsmittel, der Durchführung des Kurzspülvorgangs und dem Rückführen von Beschichtungsmittel dienen, vorgesehen. Die Hauptnadel-Steuerluft-Ventile 263 und 264 stellen bei Ansteuerung Steuerluft für die Hauptnadel des CC-Zerstäubers bzw. des ESTA-Zerstäubers über die Hauptnadel-Steuerluft-Anschlüsse 261 bzw. 262 bereit. Die Kurzspül-Steuerluft-Ventile 267 und 268 versorgen den CC- bzw. den ESTA-Zerstäuber über die Kurzspül-Steuerluft-Anschlüsse 265 bzw. 266 mit Kurzspül-Steuerluft. Ferner versorgen die beiden Rückführungs-Steuerluft-Ventile 271 und 272 den CC- bzw. den ESTA-Zerstäuber über die Anschlüsse 269 bzw. 270 mit Rückführungs-Steuerluft.

Figur 13 zeigt ein Schaltbild der Prüfmittel-Zuführ-Einrichtung 122 der Prüfvorrichtung 100 und dient auch dazu, zu verdeutlichen, an welchen Stellen das druckluftführende Leitungssystem und das prüfmittelführende Leitungssystem miteinander gekoppelt sind. Die Prüfmittel-Zuführeinrichtung 122 weist eine druckluftbetätigte Prüfmittelpumpe 146 auf, die in Fig. 13 symbolisch dargestellt ist und vorzugsweise als eine pneumatisch ausgelenkte Membranpumpe ausgebildet ist. Mittels der Prüfmittelpumpe 146 kann das bei dem gezeigten Ausführungsbeispiel in Form von vollentsalztem Wasser vorliegende Prüfmittel 125 aus dem Prüfmittelbehältnis 144, in dem das Prüfmittel 125 vorgehalten wird, angesaugt werden. Die Prüfmittelpumpe 146 wird pneumatisch betätigt, wobei die Ansteuerung durch Zu- oder Abschalten der Druckluftzufuhr mittels des Prüfmittelpumpen-Ventils 274 erfolgt. Die Anordnung des Prüfmittelpumpen-Ventils 274 innerhalb des pneumatischen Aufbaus der Prüfvorrichtung 100 kann einer gemeinsamen Betrachtung der Figuren 10, 11 und 12 entnommen werden. Stromab der Prüfmittelpumpe 146 schließt sich ein Druckregelventil 147 zum Regeln des Prüfmitteldrucks an, wobei der Solldruck des Prüfmittels 125 vorzugsweise einstellbar ist. Bei dem gezeigten Ausführungsbeispiel wird beispielsweise ein Prüfmittel-Solldruck von höchstens 2 bar eingestellt. Dieser kann an einem angeschlossenen Manometer 148 kontrolliert werden. In Abhängigkeit von der Auslegung der prüfmittelführenden Bauelemente und in Abhängigkeit von der Auslegung der Zerstäubereinrichtung 124 kann aber auch ein anderer Prüfmittel-Solldruck sinnvoll sein. Nach dem Druckregelventil 147 und dem Manometer 148 folgt ein Prüfmittelventil 149, welches hier beispielhaft mit einem allgemeinen Symbol dargestellt ist. Wie in Figur 13 schematisch angedeutet, wird das Prüfmittelventil 149 durch Ansteuern eines Prüfmittelluft-Ventils 244 pneumatisch betätigt. Weiterhin ist ein Kurzspül-Ventil 247 vorgesehen, welches es ermöglicht, über ein Rückschlagventil Druckluft in die Prüfmittelleitung stromab des Prüfmittelventils 149 zu drücken. In Figur 13 ist zur besseren Übersicht stromab des Prüfmittelventils 149 nur ein Leitungsstrang dargestellt, der zu einer aufgenommenen Zerstäubereinrichtung 124 führt. Ein weiterer Leitungsstrang kann in gleicher Weise für einen zweiten Flansch zur Aufnahme einer anderen Zerstäubereinrichtung vorgesehen sein. Die Anordnung erlaubt es, ein Spülen der Prüfmittelleitung und der Zerstäubereinrichtung 124 mit Hilfe von Druckluft vorzunehmen. Bei diesem Vorgang wird das Prüfmittel 125 mittels Druckluft aus der Prüfmittelleitung und der Zerstäubereinrichtung 124 herausgeblasen. Stromab der Verzweigungsstelle, an welcher der vom Kurzspül-Ventil 247 kommende Zweig in die Prüfmittelleitung mündet, ist die Prüfmittelleitung mit der Aufnahmeeinrichtung 121 gekoppelt, in welcher in dem in Fig. 13 gezeigten Zustand eine Zerstäubereinrichtung 124 aufgenommen ist. Die Aufnahmeeinrichtung 121 und die Zerstäubereinrichtung 124 befinden sich, wie schematisch dargestellt, innerhalb des Prüfbehältnisses 140 mit einer gestrichelt angedeuteten Abdeckung 142.

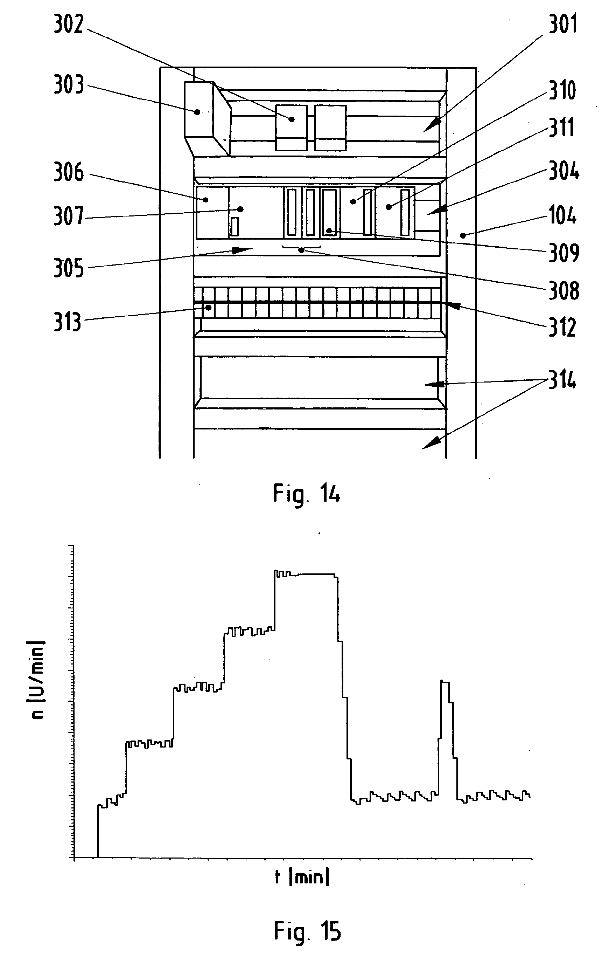

In Figur 14 ist eine Ansicht eines oberen Teils des Schaltschrankes 104 in geöffneten Zustand schematisch skizziert. In einem Spannungsversorgungsbereich 301 sind die zur Spannungsversorgung der Einrichtungen der Prüfvorrichtung 100 vorgesehenen Bauelemente angeordnet. Gezeigt sind in Fig. 14 beispielhaft Sicherungen 302 und ein Transformator 303 im Spannungsversorgungsbereich 301. Darunter angeordnet befindet sich ein SPS-Bereich 304. In diesem ist eine so genannte speicherprogrammierbare Steuerung (SPS) 305 angeordnet. Die SPS 305 steht mittels eines LAN (Local Area Network) in Netzwerkverbindung mit dem Touch-Panel-PC 105. Dadurch wird ein Datenaustausch zwischen der SPS 305 und dem Touch-Panel-PC 105 ermöglicht. Im einzelnen sind ein SPS-Netzteil 306 zur Spannungsversorgung der SPS, eine SPS-CPU 307, SPS-Eingangs- und Ausgangskarten 308, eine SPS-Trenn-baugruppe 309, eine SPS-Sicherheitseingangskarte 310 und eine SPS-Sicherheitsausgangskarte 311 vorgesehen. Die SPS-Trennbaugruppe 309 dient in einem Fehlerfall dem Schutz der Sicherheitsbaugruppen vor Überspannungen. Die im Spannungsversorgungsbereich 301 angeordneten Sicherungen 302 dienen der Absicherung der Verteilung elektrischer Spannung bei 230 V an den Transformator 303, das Netzteil der SPS 306 und den Touch-Panel-PC 105. Der Transformator 303 dient zur Bereitstellung einer elektrischen Spannung von 24 V. Unter dem SPS-Bereich 304 ist ein Relaisbereich 312 vorgesehen, in welchem Relais 313 zur Ansteuerung der Pneumatikventile der Prüfvorrichtung 100, wie sie zu den Figuren 10, 11 und 12 beschrieben sind, mittels zugeordneter Ausgänge der SPS 305 angeordnet sind. Einige der Relais 313 sind gegenseitig in geeigneter Weise verriegelt, um zu gewährleisten, dass ein Pneumatikventil nicht angesteuert werden kann, wenn ein zugeordnetes zweites Pneumatikventil bereits angesteuert ist. Ferner sind im Schaltschrank 104 Klemmenbereiche 314 vorgesehen, um elektrische und Signalleitungen in übersichtlicher Weise zusammenschließen zu können.

Bei der gezeigten Prüfvorrichtung 100 ist eine speicherprogrammierbare Steuerung (SPS) 305 vorgesehen. Die SPS 305 ist bei der Prüfvorrichtung 100 derart programmiert und konfiguriert, dass sie insbesondere das Ansteuern der Steuerluftventile 263, 264, 267, 268, 271 und 272, der Ventile 244, 247, 252 und 256 sowie des Motorluft-Ventils 211 und des Motorlagerluft-Ventils 233 ermöglicht. Ferner ist die SPS 305 zur Ansteuerung des Prüfmittelpumpen-Ventils 274 ausgebildet. Darüber hinaus ist die SPS 305 derart programmiert, dass sie mit der Luftmengenregeleinrichtung 133 Daten austauschen kann. Die Ansteuerung der Hauptventile 208, 209 und des Motorlagerluft-Hauptventils 231 erfolgt mittels eines Sicherheitsprogramms der SPS 305. Auch die Abfrage der Zustände der Detektionseinrichtungen 136 und des Zustandes des Sicherheitsschalters, mit anderen Worten, das Empfangen von Signalen der Detektionseinrichtung 136 und des Sicherheitsschaltes 150, erfolgt mittels eines Sicherheitsprogramms der SPS 305. Auch das Zuhalten der Abdeckung 142 und das Entriegeln dieser mittels des Sicherheitsschalters 150 wird durch die SPS 305 bewirkt. Insbesondere wird dadurch sichergestellt, dass die dem einen der Flansche 161, 162 der Aufnahmeeinrichtung 121, an welchem eine Zerstäubereinrichtung 124 aufgenommen ist, zugeordneten Ventile angesteuert werden. Weiterhin gewährleistet das Sicherheitsprogramm der SPS durch Abfragen des Zustandes des Sicherheitsschalters 150 und/oder durch Empfangen von Signalen von diesem, dass bei geöffneter Abdeckung 142 die Hauptventile 208, 209 und das Motorlagerluft-Hauptventil 231 nicht geöffnet werden können und dass somit bei geöffneter Abdeckung 142 kein Prüfbetrieb der Zerstäubereinrichtung 124 möglich ist. Umgekehrt erfolgt eine Entriegelung des Sicherheitsschalters 150 insbesondere erst dann, wenn die Hauptventile 208, 209, 231 nicht angesteuert, also in Sperrstellung, sind.

Im folgenden wird das Prüfen der Funktionsfähigkeit einer Zerstäubereinrichtung 124 mittels der Prüfvorrichtung 100 gemäß Figur 3 beschrieben. Zunächst wird die Prüfvorrichtung 100 über dafür vorgesehene Anschlüsse mit einem elektrischen Stromnetz und einem Druckluft-Hausnetz verbunden. Der Prüfmittelbehälter 144 wird mit einer vorbestimmten Menge an Prüfmittel 125 gefüllt. Bei dem beschriebenen Ausführungsbeispiel ist dieses Prüfmittel im Wesentlichen vollentsalztes Wasser. Die Verwendung von Wasser vermeidet Reinigungsbedarf, Gesundheitsgefährdung und Umweltbelastungen, die Verwendung von vollentsalztem Wasser kann zusätzlich verhindern, dass sich an den Bauteilen der Prüfvorrichtung und in der Zerstäubereinrichtung Rückstände, insbesondere Kalkablagerungen, bilden.

Mittels des Touch-Panel-PCs 105 kann das Entriegeln des Sicherheitsschalters 150, durch den die Abdeckung 142 verschlossen gehalten wird, bewirkt werden. Nach dem Entriegeln des Sicherheitsschalters 150 wird die Abdeckung 142 von Hand geöffnet, so dass ein Zugang zu dem Innenraum 141 des Prüfbehältnisses 140 möglich ist. Ein gewarteter und vollständig, mit Ausnahme des Glockentellers, montierter, pneumatisch betriebener Rotationszerstäuber 124 wird derart auf einen der Flansche 161, 162 aufgesetzt, dass der entsprechende Flansch und sein am Zerstäuber 124 vorgesehenes Gegenstück korrekt ineinandergreifen und ein Betrieb des Zerstäubers 124 ermöglicht wird. Der Zerstäuber 124 wird ferner beispielsweise mittels einer an dem Flansch 161, 1652 vorgesehenen Madenschraube oder dergleichen befestigt, so dass er sich während eines Prüfbetriebs nicht von der Aufnahmeeinrichtung 121 lösen kann. Wenn der Zerstäuber an einem der Flansche 161, 162 in für einen Prüfbetrieb geeigneter Weise aufgenommen und der diesem Flansch zugeordnete Näherungsschalter 136 bedämpft ist, so überträgt der an dem Flansch vorgesehene Näherungsschalter 136 ein Signal an die Steuereinrichtung 123. Dann wird die Abdeckung 142 geschlossen, wobei das Schaltergegenstück 151 in eine Öffnung des Sicherheitsschalters 150 eingeführt wird und dort einrastet. Mittels des Sicherheitsschalters 150 wird die Abdeckung 142 zugehalten.

Nach Schließen der Abdeckung 142 kann mittels der Steuereinrichtung 123 ein Prüfbetrieb des in der Aufnahmeeinrichtung 121 aufgenommenen Zerstäubers 124 durchgeführt werden. Dieser Prüfbetrieb erfolgt nach einem vorbestimmten Prüfprogramm 400 und erlaubt das Prüfen zumindest einer vorbestimmten Funktion des aufgenommenen Zerstäubers 124.

Die Steuereinrichtung 123 ermöglicht mittels des von der speicherprogrammierbaren Steuerung 305 abgearbeiteten Programms und des Touch-Panel-PCs 105 beispielsweise das manuell ausgelöste Ansteuern der Steuerluftventile 263, 264, 267, 268, 271 und 272 sowie das manuell ausgelöste Betätigen des Prüfmittelluft-Ventils 244 und damit das Ansteuern des Prüfmittelventils 149 von Hand. Wird das Prüfmittelluft-Ventil 244 geöffnet, so wird dem aufgenommenen Zerstäuber 124 Prüfmittel 125 zugeführt und kann von diesem, falls ein Applikationskörper 181 montiert ist, zerstäubt werden. Darüber hinaus ermöglicht die Steuereinrichtung 123 das manuelle Ansteuern des Lenkluft-Ventils 252, des Motorluft-Ventils 211, des Kurzspül-Ventils 247 und der Luftmengenregeleinrichtung oder Drehzahlregeleinrichtung 133. Insbesondere kann mittels des Touch-Panel-PCs 105 eine gewünschte Drehzahl des Applikationskörpers 181 des Zerstäubers 124 ausgewählt werden, welche dann der Luftmengenregeleinrichtung 133 als Soll-Größe zugeleitet wird. Das Motorlagerluft-ventil 233 wird während des Prüfbetriebs ständig angesteuert, so dass der Rotationszerstäuber 124 mit Motorlagerluft versorgt wird, um Schäden am Zerstäuber zu vermeiden. In Figur 9 ist schematisch verdeutlicht, wie die Versorgung einer aufgenommenen Zerstäubereinrichtung 124 mit Druckluft und Prüfmittel durch Ansteuerung einzelner Ventile erfolgen kann.

Ferner können während der Abarbeitung des Prüfprogramms vordefinierte Funktionen der aufgenommenen Zerstäubereinrichtung 124 automatisiert, ohne manuelles Eingreifen eines Bediener geprüft werden. Beispielsweise kann eine Soll-Drehzahl der Welle 182 des Rotationszerstäubers 124 nach einem vorbestimmten Schema variiert und/oder konstant gehalten werden. Typischerweise wird die Soll-Drehzahl der Welle 182 stufenweise gesteigert, beispielsweise von 0 Umdrehung/Minute bis auf 50.000 Umdrehungen/Minute. An diesen Drehzahltest kann sich ein simulierter Lackierablauf mittels der Zerstäubereinrichtung anschließen. Hierfür wird die aufgenommene Zerstäubereinrichtung 124 mittels der Steuereinrichtung 123 in der Weise angesteuert, dass zumindest ein Teil eines Betriebsablaufs während des Auftragens eines Beschichtungsmittels auf ein Erzeugnis, wie etwa auf eine Fahrzeugkarosse, nachgebildet wird. Zusätzlich kann auch ein Spülvorgang der Zerstäubereinrichtung 124 mittels der Prüfvorrichtung 100 simuliert werden.

Vorzugsweise erlaubt das Prüfprogramm die Erstellung eines Prüfprotokolls, welches die ermittelten Ist-Drehzahlen und weitere Ereignisse während des Prüfbetriebs der Zerstäubereinrichtung 124 enthält, so dass die Funktionsprüfung später nachvollzogen werden kann. Figur 15 zeigt beispielhaft, wie ein derartiger, auf die vorbeschriebene Weise mittels der Prüfvorrichtung 100 ermittelter Ist-Drehzahlverlauf n[U/min] der Welle 182 eines Rotationszerstäubers 124 über der Zeit t[min] aussehen kann. Von links im Diagramm der Figur 15 kommend wird die Soll-Drehzahl zunächst stufenartig gesteigert, die aufgetragene Ist-Drehzahl n[U/min] folgt dieser Steigerung im Wesentlichen. Dann wird die Drehzahl schnell reduziert, um anschlie-βend einen kurzen Lackiervorgang bei einer Drehzahl deutlich unterhalb der Maximaldrehzahl nachzubilden.

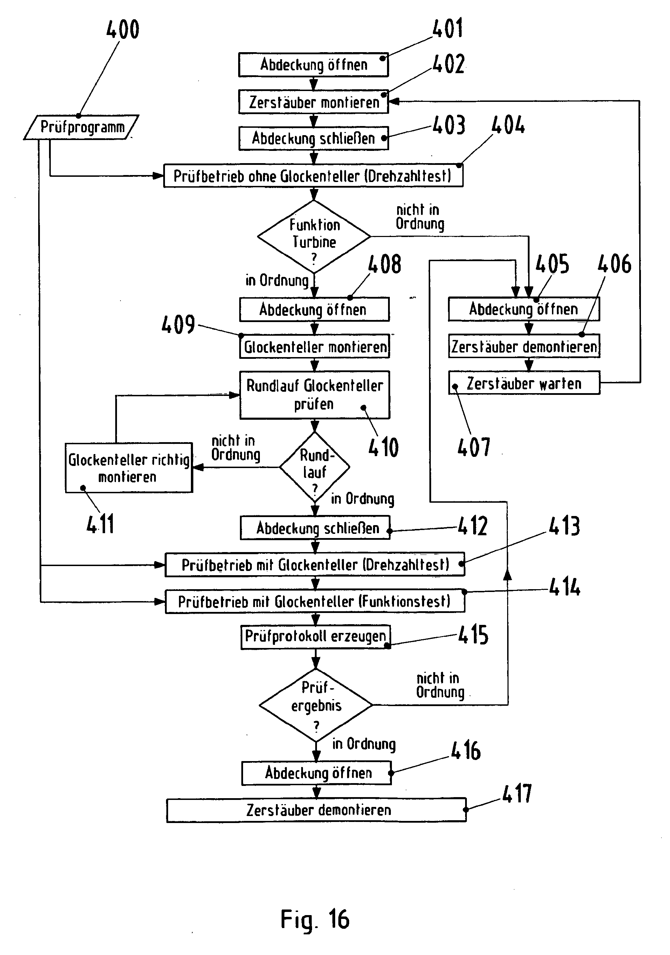

In Figur 16 ist ein Flussdiagramm eines Ausführungsbeispiels des Prüfverfahrens zum Prüfen der Funktionsfähigkeit einer Zerstäubereinrichtung 124 zum Aufbringen eines Beschichtungsmittels gezeigt. In Schritt 401 wird die Abdeckung 142 des Prüfbehältnisses 140 geöffnet, nachdem der Sicherheitsschalter 150 entriegelt wurde, wie weiter oben beschrieben. Der sich anschließende Schritt 402 besteht in dem Befestigen der Zerstäubereinrichtung 124, hier auch einfach als Zerstäuber bezeichnet, an einem Flansch 161, 162 der Aufnahmeeinrichtung 121. Mit anderen Worten wird in Schritt 402 die Zerstäubereinrichtung 124 in der Aufnahmeeinrichtung 121 aufgenommen. Es handelt sich hierbei insbesondere um einen Rotationszerstäuber, beispielsweise einen pneumatisch angetriebenen Hochgeschwindigkeits-Rotationszerstäuber, mit einem drehbaren Applikationskörper 181, beispielsweise einem Glockenteller, welcher auf einer Welle 182 der Zerstäubereinrichtung 124 befestigt werden kann. In Schritt 403 wird die Abdeckung 142 geschlossen und das Schaltergegenstück 151 rastet im Sicherheitsschalter 150 ein. In diesem Schritt 403 ist der Applikationskörper 181 noch nicht an der Welle der Zerstäubereinrichtung 124 befestigt. Sodann wird in Schritt 404 ein Prüfbetrieb der Zerstäubereinrichtung 124 mittels der Prüfvorrichtung 100 und des Prüfprogramms 400 durchgeführt. Dieser zweite Teilprüfbetrieb 404 der aufgenommenen Zerstäubereinrichtung 124 wird ohne Applikationskörper 181 durchgeführt, um zunächst die Funktion der Turbine des pneumatisch angetriebenen Zerstäubers 124 zu prüfen. Funktioniert die Turbine fehlerhaft, so wird der Prüfbetrieb beendet, in Schritt 405 die Abdeckung 142 nach Entriegeln des Sicherheitsschalters 150 geöffnet, der Zerstäuber 124 in Schritt 406 aus der Aufnahmeeinrichtung 121 entnommen oder demontiert und in Schritt 407 erneut einer Wartung unterzogen. Dann wird erneut mit Schritt 402 fortgefahren. Ist die Funktion der Turbine hingegen in Ordnung, so wird die Abdeckung 142 in Schritt 408 wiederum nach Entriegeln des Sicherheitsschalters 150 geöffnet, in Schritt 409 ein Applikationskörper 181, etwa ein Glockenteller, an der Welle 182 der Zerstäubereinrichtung 124 angebracht und in Schritt 410 der Rundlauf des Applikationskörpers 181 geprüft. Ist der Rundlauf nicht in Ordnung, so ist ein Schritt 411 auszuführen, in dem der Applikationskörper 181 oder Glockenteller überprüft und richtig montiert wird. Ist der Rundlauf in Ordnung, so wird mit Schritt 412 fortgefahren, d. h. mit dem Schließen der Abdeckung 142. Die Schritte 413 und 414 stellen zusammen einen ersten Teilprüfbetrieb der Zerstäubereinrichtung 124 dar. Schritt 413 beinhaltet einen Prüfbetrieb mit Applikationskörper 181, wobei hier überprüft wird, ob die Ist-Drehzahl der Welle 182 einem vorbestimmten Soll-DrehzahlVerlauf, wie etwa einem stufenartigen Verlauf, mit vordefinierter Toleranz folgt. Ist-Drehzahl und Soll-Drehzahl werden somit während des Prüfbetriebs verglichen. Schritt 414 beinhaltet eine weitere Funktionsprüfung der Zerstäubereinrichtung 124, wobei insbesondere in diesem Schritt 414 das Prüfmittel 125 der Zerstäubereinrichtung 124 mittels der Prüfmittel-Zuführeinrichtung 122 zugeführt und zerstäubt wird. In dem anschließenden Schritt 415 kann wie bereits beschrieben ein Prüfprotokoll erzeugt werden. Entspricht das Prüfergebnis den Anforderungen, so schließt sich Schritt 416 an, in welchem die Abdeckung 142 nach Entriegeln des Sicherheitsschalters 150 geöffnet wird. In Schritt 417 wird der somit erfolgreich geprüfte Zerstäuber 124 aus der Aufnahmeeinrichtung 121 entnommen.

Obwohl die Erfindung vorstehend anhand bevorzugter Ausführungsbeispiele beschrieben wurde, ist sie nicht darauf beschränkt, sondern kann auf vielfältige Art und Weise modifiziert werden, ohne vom Gegenstand der vorliegenden Erfindung abzuweichen.

Insbesondere ist die Erfindung nicht auf eine Verwendung mit Zerstäubereinrichtungen für Beschichtungsmittel, wie sie im Zusammenhang mit dem maschinellen Lackieren einer Automobilkarosse zum Einsatz kommen, begrenzt. Vielmehr ist auch eine Anwendung im Zusammenhang mit der Lackierung von anderen Straßenfahrzeuge wie Zweirädern, Lastkraftwagen und dergleichen sowie von anderen Gegenständen, insbesondere solchen, welche entweder industriell in großen Stückzahlen gefertigt werden oder bei denen enorm große Flächen beschichtet werden müssen, denkbar. So ist zum Beispiel die Anwendung der Erfindung auch zur Prüfung von Zerstäubereinrichtungen im Zusammenhang mit dem Lackieren von anderen Fortbewegungsmitteln wie etwa von Flugzeugen, aber auch dem Beschichten von Haushaltsgegenständen denkbar.

Darüber hinaus ist es natürlich vorstellbar, die vorliegende Erfindung derart auszugestalten, dass eine Anzahl von Zerstäubereinrichtungen, insbesondere von gleicher Bauart, gleichzeitig mittels der Prüfvorrichtung in einem ausreichend großen Prüfbehältnis auf Funktionsfähigkeit geprüft werden kann.

Ferner ist es insbesondere auch denkbar, die Prüfvorrichtung und das Prüfverfahren derart weiterzubilden, dass sie auch ein Überprüfen der im ESTA-Verfahren benutzten Möglichkeit der elektrostatischen Aufladung des Beschichtungsmittels und der damit verbundenen Funktionen der Zerstäubereinrichtung ermöglichen.

## Patentansprüche

1. Prüfvorrichtung (10; 20; 100) zum Prüfen der Funktionsfähigkeit einer Zerstäubereinrichtung (14; 24; 124) zum Aufbringen eines Beschichtungsmittels, insbesondere eines Lackes im Kraftfahrzeugbereich, mit:
einer Aufnahmeeinrichtung (11; 21; 121) zum Aufnehmen der zu prüfenden Zerstäubereinrichtung (14; 24; 124) in einem vorbestimmten Betriebszustand;
einer Prüfmittel-Zuführeinrichtung (12; 22; 122), welche zum Zuführen eines vorbestimmten, zu zerstäubenden Prüfmittels (15; 25; 125) zu der aufgenommenen Zerstäubereinrichtung (14; 24; 124) mit der Aufnahmeeinrichtung (11; 21; 121) gekoppelt ist; und
einer Steuereinrichtung (13; 23; 123) zum Durchführen eines Prüfbetriebes der aufgenommenen Zerstäubereinrichtung (14; 24; 124) nach einem vorbestimmten Prüfprogramm (400) zum Prüfen einer vorbestimmten Funktion der aufgenommenen Zerstäubereinrichtung (14; 24; 124); **dadurch gekennzeichnet,**
**dass** ein Prüfbehältnis (40; 140) zum Auffangen des während des Prüfbetriebes zerstäubten Prüfmittels (25; 125), für eine erneute Verwendung desselben zur fortge setzten Prüfung der Funktionsfähigkeit der aufgenommenen Zerstäubereinrichtung (24; 124), vorgesehen ist.

2. Prüfvorrichtung nach Anspruch 1, **dadurch gekennzeichnet, dass** die Prüfmittel-Zuführeinrichtung (122) eine Pumpeinrichtung (146), insbesondere eine Druckluftmembranpumpe, zum Fördern des Prüfmittels (125) zu der aufgenommenen Zerstäubereinrichtung (124) aufweist.

3. Prüfvorrichtung nach Anspruch 1 oder 2, **dadurch gekennzeichnet, dass** eine mit der Aufnahmeeinrichtung (21; 121) gekoppelte Druckluft-Zuführeinrichtung (29; 129) zum Zuführen von Druckluft zu der aufgenommenen Zerstäubereinrichtung (24; 124) vorgesehen ist.

4. Prüfvorrichtung nach Anspruch 3, **dadurch gekennzeichnet, dass** die Druckluft-Zuführeinrichtung (29; 129) mehrere Druckluftleitungen (30; 130) zum Zuführen von Druckluft zu der aufgenommenen Zerstäubereinrichtung (24; 124) aufweist und dass zur Regulierung eines Druckluftstroms in zumindest einer der Druckluftleitungen (30; 130) ein oder mehrere mittels der Steuereinrichtung (23; 123) betätigbare Ventile vorgesehen sind.

5. Prüfvorrichtung nach Anspruch 4, **dadurch gekennzeichnet, dass** die Druckluft-Zuführeinrichtung (29; 129) eine mit der Steuereinrichtung (23; 123) gekoppelte Luftmengenregeleinrichtung (33; 133), insbesondere ein Proportionalregelventil, zur Regelung einer eine (30; 210) der Druckluftleitungen (30; 130) durchströmenden Luftmenge in Abhängigkeit von einer durch die Steuereinrichtung (23; 123) bereitgestellten Ist-Größe und einer durch die Steuereinrichtung (23; 123) bereitgestellten zugehörigen Soll-Größe aufweist.

6. Prüfvorrichtung nach Anspruch 5, **dadurch gekennzeichnet, dass** die Aufnahmeeinrichtung (21; 121) derart angeordnet und ausgebildet ist, dass sich die aufgenommene Zerstäubereinrichtung (24; 124) mit einem Abschnitt (28; 128), aus dem während des Prüfbetriebes zerstäubtes Prüfmittel (25; 125) austreten kann, innerhalb des Prüfbehältnisses (40; 140) befindet.

7. Prüfvorrichtung nach Anspruch 5 oder 6, **dadurch gekennzeichnet, dass** die Aufnahmeeinrichtung (21; 121) derart innerhalb des Prüfbehältnisses (40; 140) angeordnet ist, dass sich die aufgenommene Zerstäubereinrichtung (24; 124) vollständig innerhalb des Prüfbehältnisses (40; 140) befindet.

8. Prüfvorrichtung nach wenigstens einem der vorhergehenden Ansprüche, **dadurch gekennzeichnet, dass** die Aufnahmeeinrichtung (11; 21; 121) für eine Aufnahme von ein, zwei oder mehr Zerstäubereinrichtungen (14; 24; 124) gleicher oder unterschiedlicher Bauart ausgebildet ist und dass insbesondere zu einem vorbestimmten Zeitpunkt eine vorbestimmte Anzahl an Zerstäubereinrichtungen (14; 24; 124), beispielsweise genau eine Zerstäubereinrichtung (14; 24; 124), in der Aufnahmeeinrichtung (11; 21; 121) aufnehmbar ist.

9. Prüfvorrichtung nach wenigstens einem der vorhergehenden Ansprüche, **dadurch gekennzeichnet, dass** die Aufnahmeeinrichtung (21; 121) mindestens eine mit der Steuereinrichtung (23; 123) gekoppelte Detektionseinrichtung (36; 136), insbesondere einen Näherungsschalter, zur Erfassung der Position der zu prüfenden Zerstäubereinrichtung (24; 124) aufweist, welche ein Signal (37; 137) an die Steuereinrichtung (23; 123) übermittelt, wenn die Zerstäubereinrichtung (24; 124) eine vorbestimmte Position in Bezug auf die Aufnahmeeinrichtung (21; 121) erreicht hat, wobei die Steuereinrichtung (23; 123) das Prüfen einer vorbestimmten Funktion der aufgenommenen Zerstäubereinrichtung (24; 124) nach dem Erhalt dieses Signals (37; 137) ermöglicht.

10. Prüfvorrichtung nach wenigstens einem der vorhergehenden Ansprüche, **dadurch gekennzeichnet, dass** die aufgenommene Zerstäubereinrichtung (124) einen Rotationszerstäuber, insbesondere einen pneumatisch angetriebenen Hochgeschwindigkeits-Rotationszerstäuber, mit einem drehbaren Applikationskörper (181), insbesondere einem Glockenteller, umfasst.

11. Prüfvorrichtung nach wenigstens einem der vorhergehenden Ansprüche, **dadurch gekennzeichnet, dass** das Prüfmittel (15; 25; 125) Wasser, insbesondere vollentsalztes Wasser, beinhaltet.

12. Prüfverfahren zum Prüfen der Funktionsfähigkeit einer Zerstäubereinrichtung, mittels einer Prüfvorrichtung gemäß Anspruch 1, (14; 24; 124) zum Aufbringen eines Beschichtungsmittels, insbesondere eines Lackes im Kraftfahrzeugbereich, mittels einer Prüfvorrichtung (10; 20; 100), mit den folgenden Verfahrensschritten:
Aufnehmen der zu prüfenden Zerstäubereinrichtung (14; 24; 124) in einem vorbestimmten Betriebszustand mittels einer Aufnahmeeinrichtung (11; 21; 121);
Zuführen eines vorbestimmten, zu zerstäubenden Prüfmittels (15; 25; 125) zu der aufgenommenen Zerstäubereinrichtung (14; 24; 124) mittels einer mit der Aufnahmeeinrichtung (11; 21; 121) gekoppelten Prüfmittel-Zuführeinrichtung (12; 22; 122); und
Durchführen eines Prüfbetriebes der aufgenommenen Zerstäubereinrichtung (14; 24; 124) nach einem vorbestimmten Prüfprogramm (400) mittels einer Steuereinrichtung (13; 23; 123) zum Prüfen einer vorbestimmten Funktion der aufgenommenen Zerstäubereinrichtung (14; 24; 124);
wobei ein Prüfbehältnis (40; 140) zum Auffangen des während des Prüfbetriebes zerstäubten Prüfmittels (25; 125), für eine erneute Verwendung desselben zur fortgesetzten Prüfung der Funktionsfähigkeit der aufgenommenen Zerstäubereinrichtung (24; 124), vorgesehen ist.

13. Prüfverfahren nach Anspruch 12, **dadurch gekennzeichnet, dass** die Zerstäubereinrichtung (124), welche mittels der Aufnahmeeinrichtung (121) aufgenommen wird, mit einem Rotationszerstäuber, insbesondere einem pneumatisch angetriebenen Hochgeschwindigkeits-Rotationszerstäuber, mit einem drehbaren Applikationskörper (181), insbesondere einem Glockenteller, ausgebildet wird und eine Welle (182) aufweist, an welcher der Applikationskörper (181) befestigt wird.

14. Prüfverfahren nach Anspruch 13, **dadurch gekennzeichnet, dass** während des Prüfbetriebes der aufgenommenen Zerstäubereinrichtung (124) nach dem vorbestimmten Prüfprogramm (400) ein erster Teilprüfbetrieb (413, 414) der aufgenommenen Zerstäubereinrichtung (124) durchgeführt wird und der Applikationskörper (181) vor dem Beginn des ersten Teilprüfbetriebes (413, 414) an der Welle (182) der aufgenommenen Zerstäubereinrichtung (124) befestigt wird.

15. Prüfverfahren nach Anspruch 14, **dadurch gekennzeichnet, dass** während des Prüfbetriebes der aufgenommenen Zerstäubereinrichtung (124) nach dem vorbestimmten Prüfprogramm (400) vor dem ersten Teilprüfbetrieb (413, 414) ein zweiter Teilprüfbetrieb (404) der aufgenommenen Zerstäubereinrichtung (124) durchgeführt wird und der Applikationskörper (181) nach der Beendigung des zweiten Teilprüfbetriebes (404) an der Welle (182) der aufgenommenen Zerstäubereinrichtung (124) befestigt wird.

16. Prüfverfahren nach wenigstens einem der Ansprüche 13 bis 15, **dadurch gekennzeichnet, dass** während des Prüfbetriebes der aufgenommenen Zerstäubereinrichtung (124), insbesondere mittels eines Laserstrahls, welcher von einer mit der Welle (182) verbundenen Reflektorscheibe (173) reflektiert und von einem mit der Steuereinrichtung (123) gekoppelten, optoelektronischen Sensor (172) detektiert wird, wiederholt eine Ist-Drehzahl der Welle (182) ermittelt wird.

17. Prüfverfahren nach wenigstens einem der Ansprüche 13 bis 16, **dadurch gekennzeichnet, dass** während der Ausführung des vorbestimmten Prüfprogramms (400) eine Soll-Drehzahl der Welle (182) nach einem vorbestimmten Schema variiert und/oder konstant gehalten, insbesondere stufenweise gesteigert, wird und/oder dass die ermittelte Ist-Drehzahl während des Prüfbetriebes wiederholt mit der Soll-Drehzahl der Welle (182) verglichen wird.

18. Prüfverfahren nach wenigstens einem der Ansprüche 12 bis 17, **dadurch gekennzeichnet, dass** während der Ausführung des vorbestimmten Prüfprogramms (400) die aufgenommene Zerstäubereinrichtung (14; 24; 124) mittels der Steuerein richtung (13; 23; 123) in der Weise angesteuert wird, dass durch diese Ansteuerung zumindest ein Teil eines Betriebsablaufs während des Auftragens eines Beschichtungsmittels mittels der zu prüfenden Zerstäubereinrichtung (14; 24; 124) auf ein Erzeugnis und/oder während eines Spülvorgangs der zu prüfenden Zerstäubereinrichtung (14; 24; 124) nachgebildet wird.

19. Prüfverfahren nach wenigstens einem der Ansprüche 12 bis 18, **dadurch gekennzeichnet, dass** als Prüfmittel (15; 25; 125) ein Wasser, insbesondere vollentsalztes Wasser, beinhaltendes Mittel verwendet wird.

## Claims

1. Testing apparatus (10; 20; 100) for testing the functionality of an atomizer device (14; 24; 124) for applying a coating agent, in particular a paint, in the automotive field, having:
a mounting device (11; 21; 121) for the mounting of the atomizer device (14; 24; 124), which is to be tested, in a predetermined operating state;
a test agent feed device (12; 22; 122) which is coupled to the mounting device (11; 21; 121) for the purpose of feeding a predetermined test agent (15; 25; 125) to be atomized to the mounted atomizer device (14; 24; 124); and
a control device (13; 23; 123) for carrying out a test operation of the mounted atomizer device (14; 24; 124) in accordance with a predetermined test program (400) for testing a predetermined function of the mounted atomizer device (14; 24; 124); **characterized**
**in that** a test vessel (40; 140) is provided for collecting the test agent (25; 125) which is atomized during the test operation, in order that said test agent can be re-used for the continued testing of the functionality of the mounted atomizer device (24; 124).

2. Testing apparatus according to Claim 1, **characterized in that** the test agent feed device (122) has a pump device (146), in particular a compressed-air diaphragm pump, for delivering the test agent (125) to the mounted atomizer device (124).

3. Testing apparatus according to Claim 1 or 2, **characterized in that** a compressed-air feed device (29; 129) is provided which is coupled to the mounting device (21; 121) and which serves for feeding compressed air to the mounted atomizer device (24; 124).

4. Testing apparatus according to Claim 3, **characterized in that** the compressed-air feed device (29; 129) has multiple compressed-air lines (30; 130) for feeding compressed air to the mounted atomizer device (24; 124), and **in that**, for the regulation of a compressed-air stream, one or more valves that can be actuated by means of the control device (23; 123) are provided in at least one of the compressed-air lines (30; 130).

5. Testing apparatus according to Claim 4, **characterized in that** the compressed-air feed device (29; 129) has an air flow rate regulating device (33; 133), in particular a proportional regulating valve, which is coupled to the control device (23; 123) and which serves for regulating, as a function of an actual variable provided by the control device (23; 123) and of an associated setpoint variable provided by the control device (23; 123), an air flow rate through one (30; 210) of the compressed-air lines (30; 130).

6. Testing apparatus according to Claim 5, **characterized in that** the mounting device (21; 121) is arranged and designed such that the mounted atomizer device (24; 124) is situated with a section (28; 128) within the test vessel (40; 140), from which section test agent (25; 125) atomized during the test operation can emerge.

7. Testing apparatus according to Claim 5 or 6, **characterized in that** the mounting device (21; 121) is arranged within the test vessel (40; 140) such that the mounted atomizer device (24; 124) is situated entirely within the test vessel (40; 140).

8. Testing apparatus according to at least one of the preceding claims, **characterized in that** the mounting device (11; 21; 121) is designed for mounting one, two or more atomizer devices (14; 24; 124) of identical or different construction, and **in that**, in particular, a predetermined number of atomizer devices (14; 24; 124), for example precisely one atomizer device (14; 24; 124), can be mounted in the mounting device (11; 21; 121) at a predetermined point in time.

9. Testing apparatus according to at least one of the preceding claims, **characterized in that** the mounting device (21; 121) has at least one detection device (36; 136), in particular a proximity switch, which is coupled to the control device (23; 123) and which serves for detecting the position of the atomizer device (24; 124) to be tested, said detection device transmitting a signal (37; 137) to the control device (23; 123) when the atomizer device (24; 124) has reached a predetermined position in relation to the mounting device (21; 121), wherein the control device (23; 123) permits the testing of a predetermined function of the mounted atomizer device (24; 124) after said signal (37; 137) is received.

10. Testing apparatus according to at least one of the preceding claims, **characterized in that** the mounted atomizer device (124) comprises a rotary atomizer, in particular a pneumatically driven high-speed rotary atomizer, having a rotatable application body (181), in particular a bell disc.

11. Testing apparatus according to at least one of the preceding claims, **characterized in that** the test agent (15; 25; 125) comprises water, in particular fully desalinated water.

12. Testing method for testing, by means of a testing apparatus according to Claim 1, the functionality of an atomizer device (14; 24; 124) for applying a coating agent, in particular a paint in the automotive field, by means of a testing apparatus (10; 20; 100), having the following method steps:
mounting the atomizer device (14; 24; 124), which is to be tested, in a predetermined operating state by means of a mounting device (11; 21; 121);
feeding a predetermined test agent (15; 25; 125) to be atomized to the mounted atomizer device (14; 24; 124) by means of a test agent feed device (12; 22; 122) coupled to the mounting device (11; 21; 121); and
carrying out a test operation of the mounted atomizer device (14; 24; 124) in accordance with a predetermined test program (400) by means of a control device (13; 23; 123) for testing a predetermined function of the mounted atomizer device (14; 24; 124);
wherein a test vessel (40; 140) is provided for collecting the test agent (25; 125) which is atomized during the test operation, in order that said test agent can be re-used for the continued testing of the functionality of the mounted atomizer device (24; 124).

13. Testing method according to Claim 12, **characterized in that** the atomizer device (124) which is mounted by means of the mounting device (121) is formed with a rotary atomizer, in particular a pneumatically driven high-speed rotary atomizer, having a rotatable application body (181), in particular a bell disc, and has a shaft (182) to which the application body (181) is fastened.

14. Testing method according to Claim 13, **characterized in that**, during the test operation of the mounted atomizer device (124) in accordance with the predetermined test program (400), a first partial test operation (413, 414) of the mounted atomizer device (124) is carried out, and the application body (181) is fastened to the shaft (182) of the mounted atomizer device (124) before the start of the first partial test operation (413, 414).

15. Testing method according to Claim 14, **characterized in that**, during the test operation of the mounted atomizer device (124) in accordance with the predetermined test program (400), a second partial test operation (404) of the mounted atomizer device (124) is carried out before the first partial test operation (413, 414), and the application body (181) is fastened to the shaft (182) of the mounted atomizer device (124) after the end of the second partial test operation (404).

16. Testing method according to at least one of Claims 13 to 15, **characterized in that**, during the test operation of the mounted atomizer device (124), an actual rotational speed of the shaft (182) is determined repeatedly in particular by means of a laser beam which is reflected by a reflector disc (173) connected to the shaft (182) and which is detected by an optoelectronic sensor (172) coupled to the control device (123).

17. Testing method according to at least one of Claims 13 to 16, **characterized in that**, during the execution of the predetermined test program (400), a setpoint rotational speed of the shaft (182) is varied and/or kept constant, in particular increased in a stepped manner, in accordance with a predetermined pattern, and/or **in that**, during the test operation, the determined actual rotational speed is compared repeatedly with the setpoint rotational speed of the shaft (182).

18. Testing method according to at least one of Claims 12 to 17, **characterized in that**, during the execution of the predetermined test program (400), the mounted atomizer device (14; 24; 124) is actuated by means of the control device (13; 23; 123) in such a way that, by way of said actuation, at least a part of an operating sequence during the application of a coating agent to an article by means of the atomizer device (14; 24; 124) to be tested and/or during a flushing process of the atomizer device (14; 24; 124) to be tested is simulated.

19. Testing method according to at least one of Claims 12 to 18, **characterized in that**, as a test agent (15; 25; 125), use is made of an agent containing water, in particular fully desalinated water.

## Revendications

1. Dispositif de contrôle (10 ; 20 ; 100) pour contrôler la capacité de fonctionnement d'un dispositif de gicleur (14 ; 24 ; 124) destiné à appliquer un moyen de revêtement, notamment une laque dans le domaine de l'automobile, comportant :
un dispositif de réceptacle (11 ; 21 ; 121) pour recevoir le dispositif de gicleur (14 ; 24 ; 124) à contrôler dans un état de fonctionnement prédéterminé ;
un dispositif d'alimentation de moyen de contrôle (12 ; 22 ; 122), qui est couplé au dispositif de réceptacle (11 ; 21 ; 121) pour alimenter un moyen de contrôle (15 ; 25 ; 125) prédéterminé, à pulvériser, dans le dispositif de gicleur (14 ; 24 ; 124) installé dans le réceptacle ; et
un dispositif de commande (13 ; 23 ; 123) pour effectuer un fonctionnement de contrôle du dispositif de gicleur (14 ; 24 ; 124) installé dans le réceptacle selon un programme de contrôle (400) prédéterminé afin de contrôler une fonction prédéterminée du dispositif de gicleur (14 ; 24 ; 124) installé dans le réceptacle, **caractérisé en ce que**
un récipient de contrôle (40 ; 140) pour capter le moyen de contrôle (25 ; 125) pulvérisé pendant le fonctionnement de contrôle est prévu pour une utilisation renouvelée de celui-ci lors de la poursuite du contrôle de la capacité de fonctionnement du dispositif de gicleur (24 ; 124) installé dans le réceptacle.

2. Dispositif de contrôle selon la revendication 1, **caractérisé en ce que** le dispositif d'alimentation de moyen de contrôle (122) présente un dispositif de pompe (146), notamment une pompe à membrane d'air pressurisé, pour transporter le moyen de contrôle (125) vers le dispositif de gicleur (124) installé dans le réceptacle.

3. Dispositif de contrôle selon les revendications 1 ou 2, **caractérisé en ce qu'**un dispositif d'alimentation d'air pressurisé (29 ; 129) couplé au dispositif de réceptacle (21 ; 121) est prévu afin d'alimenter de l'air pressurisé dans le dispositif de gicleur (24 ; 124) installé dans le réceptacle.

4. Dispositif de contrôle selon la revendication 3, **caractérisé en ce que** le dispositif d'alimentation d'air pressurisé (29 ; 129) présente plusieurs conduites d'air pressurisé (30 ; 130) pour alimenter de l'air pressurisé dans le dispositif de gicleur (24 ; 124) installé dans le réceptacle et **en ce que** pour réguler un flux d'air pressurisé dans au moins l'une des conduites d'air pressurisé (30 ; 130), une ou plusieurs soupapes actionnables au moyen du dispositif de commande (23 ; 123) sont prévues.

5. Dispositif de contrôle selon la revendication 4, **caractérisé en ce que** le dispositif d'alimentation d'air pressurisé (29 ; 129) présente un dispositif de régulation de la quantité d'air (33 ; 133) couplé au dispositif de commande (23 ; 123), notamment une soupape de régulation proportionnelle, afin de réguler une quantité d'air s'écoulant à travers une (30 ; 210) des conduites d'air pressurisé (30 ; 130) en fonction d'une grandeur effective fournie par le dispositif de commande (23 ; 123) et d'une valeur de consigne afférente fournie par le dispositif de commande (23 ; 123).

6. Dispositif de contrôle selon la revendication 5, **caractérisé en ce que** le dispositif de réceptacle (21 ; 121) est disposé et conçu de telle sorte que le dispositif de gicleur (24 ; 124) installé dans le réceptacle se trouve par une portion (28 ; 128), hors de laquelle le moyen de contrôle (25 ; 125) pulvérisé peut ressortir pendant le fonctionnement de contrôle, à l'intérieur du récipient de contrôle (40 ; 140).

7. Dispositif de contrôle selon les revendications 5 ou 6, **caractérisé en ce que** le dispositif de réceptacle (21 ; 121) est disposé à l'intérieur du récipient de contrôle (40 ; 140) de telle sorte que le dispositif de gicleur (24 ; 124) installé dans le réceptacle se trouve complètement à l'intérieur du récipient de contrôle (40 ; 140).

8. Dispositif de contrôle selon au moins une des revendications précédentes, **caractérisé en ce que** le dispositif de réceptacle (11 ; 21 ; 121) est conçu pour recevoir un, deux ou plus de deux dispositifs de gicleur (14 ; 24 ; 124) de modèle identique ou différent et **en ce que** notamment à un moment prédéterminé un nombre prédéterminé de dispositifs de gicleur (14 ; 24 ; 124), par exemple exactement un dispositif de gicleur (14 ; 24 ; 124) peut être reçu dans le dispositif de réceptacle (11 ; 21 ; 121).

9. Dispositif de contrôle selon au moins une des revendications précédentes, **caractérisé en ce que** le dispositif de réceptacle (21 ; 121) présente au moins un dispositif de détection (36 ; 136) couplé au dispositif de commande (23 ; 123), notamment un détecteur de proximité, afin de détecter la position du dispositif de gicleur (24 ; 124) à contrôler, qui transmet un signal (37 ; 137) au dispositif de commande (23 ; 123), quand le dispositif de gicleur (24 ; 124) a atteint une position prédéterminée par rapport au dispositif de réceptacle (21 ; 121), le dispositif de commande (23 ; 123) permettant le contrôle d'une fonction prédéterminée du dispositif de gicleur (24 ; 124) installé dans le réceptacle après l'obtention de ce signal (37 ; 137).

10. Dispositif de contrôle selon au moins une des revendications précédentes, **caractérisé en ce que** le dispositif de gicleur (124) installé dans le réceptacle comprend un pulvérisateur rotatif, notamment un pulvérisateur rotatif à haute vitesse entraîné pneumatiquement, comportant un corps d'application (181) rotatif, notamment un plateau à cloche.

11. Dispositif de contrôle selon au moins une des revendications précédentes, **caractérisé en ce que** le moyen de contrôle (15 ; 25 ; 125) contient de l'eau, notamment de l'eau déminéralisée.

12. Procédé de contrôle pour contrôler la capacité de fonctionnement d'un dispositif de gicleur (14 ; 24 ; 124), au moyen d'un dispositif de contrôle selon la revendication 1, destiné à appliquer un moyen de revêtement, notamment une laque dans le domaine de l'automobile, au moyen d'un dispositif de contrôle (10 ; 20 ; 100), comportant les étapes de procédé suivantes :
recevoir le dispositif de gicleur (14 ; 24 ; 124) à contrôler dans un état de fonctionnement prédéterminé au moyen d'un dispositif de réceptacle (11 ; 21 ; 121) ;
alimenter un moyen de contrôle (15 ; 25 ; 125) prédéterminé, à pulvériser, dans le dispositif de gicleur (14 ; 24 ; 124) installé dans le réceptacle au moyen d'un dispositif d'alimentation de moyen de contrôle (12 ; 22 ; 122) couplé au dispositif de réceptacle (11 ; 21 ; 121) ; et
effectuer un fonctionnement de contrôle du dispositif de gicleur (14 ; 24 ; 124) installé dans le réceptacle selon un programme de contrôle prédéterminé (400) au moyen d'un dispositif de commande (13 ; 23 ; 123) afin de contrôler une fonction prédéterminée du dispositif de gicleur (14 ; 24 ; 124) installé dans le réceptacle ;
un récipient de contrôle (40 ; 140) pour capter le moyen de contrôle (25 ; 125) pulvérisé pendant le fonctionnement de contrôle étant prévu pour une utilisation renouvelée de celui-ci lors de la poursuite du contrôle de la capacité de fonctionnement du dispositif de gicleur (24 ; 124) installé dans le réceptacle.

13. Procédé de contrôle selon la revendication 12, **caractérisé en ce que** le dispositif de gicleur (124), qui est reçu au moyen du dispositif de réceptacle (121), est conçu avec un pulvérisateur rotatif, notamment un pulvérisateur rotatif à haute vitesse, entraîné pneumatiquement, comportant un corps d'application rotatif (181), notamment un plateau à cloche et présente un arbre (182), sur lequel le corps d'application (181) est fixé.

14. Procédé de contrôle selon la revendication 13, **caractérisé en ce que** pendant le fonctionnement de contrôle du dispositif de gicleur (124) installé dans le réceptacle selon le programme de contrôle prédéterminé (400), un premier fonctionnement de contrôle partiel (413, 414) du dispositif de gicleur (124) installé dans le réceptacle est effectué et le corps d'application (181) est fixé avant le début du premier fonctionnement de contrôle partiel (413, 414) sur l'arbre (182) du dispositif de gicleur (124) installé dans le réceptacle.

15. Procédé de contrôle selon la revendication 14, **caractérisé en ce que** pendant le fonctionnement de contrôle du dispositif de gicleur (124) installé dans le réceptacle selon le programme de contrôle prédéterminé (400) avant le premier fonctionnement de contrôle partiel (413, 414), un deuxième fonctionnement de contrôle partiel (404) du dispositif de gicleur (124) installé dans le réceptacle est effectué et le corps d'application (181) est fixé après la fin du deuxième fonctionnement de contrôle partiel (404) sur l'arbre (182) du dispositif de gicleur (124) installé dans le réceptacle.

16. Procédé de contrôle selon au moins une des revendications 13 à 15, **caractérisé en ce que** pendant le fonctionnement de contrôle du dispositif de gicleur (124) installé dans le réceptacle, notamment au moyen d'un faisceau laser, qui est réfléchi à partir d'un disque réflecteur (173) relié à l'arbre (182) et détecté par un capteur optoélectronique (172), couplé au dispositif de commande (123), une vitesse de rotation effective de l'arbre (182) est déterminée répétitivement.

17. Procédé de contrôle selon au moins une des revendications 13 à 16, **caractérisé en ce que** pendant l'exécution du programme de contrôle prédéterminé (400), une vitesse de rotation de consigne de l'arbre (182) est variée et/ou gardée constante selon un schéma prédéterminé, notamment augmentée par étapes et/ou **en ce que** la vitesse de rotation effective déterminée pendant le fonctionnement de contrôle est comparée répétitivement avec la vitesse de rotation de consigne de l'arbre (182).

18. Procédé de contrôle selon au moins une des revendications 12 à 17, **caractérisé en ce que** pendant l'exécution du programme de contrôle prédéterminé (400), le dispositif de gicleur (14 ; 24 ; 124) installé dans le réceptacle est piloté au moyen du dispositif de commande (13 ; 23 ; 123) d'une manière telle que par ce pilotage, au moins une partie d'un déroulement de fonctionnement pendant l'application d'un moyen de revêtement au moyen du dispositif de gicleur (14 ; 24 ; 124) à contrôler soit reproduite sur un produit et/ou pendant un processus de rinçage du dispositif de gicleur (14 ; 24 ; 124) à contrôler.

19. Procédé de commande selon au moins une des revendications 12 à 18, **caractérisé en ce que** comme moyen de contrôle (15 ; 25 ; 125) un moyen contenant de l'eau, notamment une eau déminéralisée, est employé.
